# EUROPEAN PATENT SPECIFICATION

(11) **EP 2 228 682 B1**
(45) Date of publication and mention of the grant of the patent: **02.01.2013**
(21) Application number: 10166294.8
(22) Date of filing: 28.02.2005
(51) Int. Cl.: B66F 11/04, F16M 11/04, F16M 11/42, F16M 13/00, F16M 11/18, F16M 11/20, F16M 11/12, G03B 17/56, B66C 23/70

(54) **Telescoping Camera Crane**
Teleskopkamerakran
Grue de caméra télescopique

(30) Priority: 01.03.2004 US 791118; 16.04.2004 US 826819; 03.09.2004 US 934804; 09.09.2004 US 938021; 14.01.2005 US 643817 P
(43) Date of publication of application: 15.09.2010
(62) Divisional of application: 05724101.0
(73) Proprietor: Chapman/Leonard Studio Equipment, Inc., North Hollywood California 91605 (US)
(72) Inventor: CHAPMAN, Leonard T., North Hollywood, CA 91605 (US)
(74) Representative: Viering, Jentschura & Partner

(56) References cited:
- EP-A2- 0 398 483
- FR-A- 2 380 492
- US-A- 4 621 786
- US-A1- 2003 147 641

## Description

### PRIORITY CLAIM

This application claims the benefit of U.S. Application No. 10/791,118, filed March 1, 2004, U.S. Application No. 10/826,819, filed April 16, 2004, U.S. Application No. 10/934,804, filed September 3, 2004, U.S. Application No. 10/938,021 filed September 9, 2004, and U.S. Provisional Application No. 60/643,817, filed January 14, 2005.

### FIELD OF THE INVENTION

The field of the invention is camera cranes.

In particular, the present invention relates to a camera support according to the preamble of claim 1.

### BACKGROUND OF THE INVENTION

A camera support of the initially-mentioned type is known, e.g., from US 4,621,786.

Camera cranes are often used in motion picture and television production. A motion picture or television camera is typically mounted on a crane arm, which is supported on a mobile base, dolly, or truck. The mobile base may be pushed and steered by hand. Larger units, which have more weight-carrying capacity, and longer reaches, typically have electric driving motors powered by onboard batteries. Some mobile bases also include conventional gasoline or diesel engines, and may serve as over-the-road vehicles.

Telescoping camera cranes have a telescoping arm that can extend and retract. This allows for a broader range of camera movement. These types of cranes use various electrical systems. Consequently, these cranes tend to have performance problems if used in rain or wet conditions and cannot be used underwater.

During filming sequences with a motion picture or video camera, it is also often necessary for the camera to be moved over a floor or ground surface. This movement must be accomplished smoothly. Even small amounts of shock or vibration transmitted to the camera lens can result in shaky or erratic recorded images. Shock and vibration isolators have been designed that are very effective in isolating the camera from lateral (side to side) and longitudinal (front to back) shock and vibration impulses. However, these isolators have only limited ability to prevent vertical shock or vibration impulses from reaching the camera. Accordingly, there is a need for an improved device and system to allow for smooth filming sequences.

Many camera cranes and dollies have a leveling system for keeping the camera platform in a level orientation as the crane or dolly arm pivots up or down. Typically, these leveling systems use a parallelogram linkage that keeps the camera platform locally level, i.e., level or parallel with the vehicle, such as a crane or dolly on which they are mounted (and not necessarily level with the ground). However, when the dolly rolls over an irregularity, such as a bump or crack, the dolly is momentarily inclined at a slight angle. This movement, or elevation angulation, causes the camera lens to also be momentarily inclined at a slight angle. This disturbance of the camera lens can become unacceptable, especially when filming distant subjects with telephoto lenses. Accordingly, there is also a need for an improved camera platform leveling system able to better compensate for angulation.

### BRIEF STATEMENT OF THE INVENTION

The present invention provides a camera support according to claim 1. Further embodiments of the camera support of the present invention are described in the dependent claims. The camera support of the present invention may be used with a telescoping camera crane with various features and advantages. A shock and/or vibration isolating system, which reduces physical disturbances to a camera, as the crane, dolly, or other vehicle supporting the camera rolls over an irregular floor or supporting surface. Vibration or shock impulses in each of the vertical, lateral, or longitudinal directions are effectively prevented from significantly disturbing the camera. The present isolator is especially useful on camera cranes where greater ranges of movement, higher rolling speeds, and irregular floor or ground surfaces, such as pavement (having cracks, bumps, expansion joints, etc.) are frequently encountered.

In one aspect, the camera crane has mechanical drive and camera platform leveling systems. Consequently, the camera crane is essentially waterproof. Previously unknown and dramatic camera movements and angles can be achieved. For example, using the present crane, the camera can move down toward a water surface, and then pass through the water surface into a submerged position, in a single continuous movement, and without moving the mobile base, vehicle, or dolly supporting the crane.

The telescoping sections of the camera crane may be driven by a hydraulic system, which provides exceptionally smooth and near silent extension and retraction movement. This movement can also be precisely controlled. The hydraulic system, if used, includes a pair of hydraulic cylinders, which alternately pull on cables to extend and retract telescoping crane sections. This system is highly compact, efficient, and waterproof.

A stop position system may be used to set stop positions via an electronic control; or via valves actuated directly by a component attached to and moving with an arm section. These systems allow for highly reliable, repeatable, and accurate camera positioning.

A camera platform leveling system may be provided with cables to maintain the camera platform in a level position, as the crane arm pivots up or down in elevation. A cable tensioning or camera platform stabilizing system automatically can compensate for backlash or stretching of the cables, which allows the leveling system to constantly keep the camera platform level.

A camera support which may be used with the crane has an isolator plate attached to a base and that is pivotable in a vertical direction. Springs aligned at a slight angle to the plate exert a spring force between the base and the plate. The spring force is advantageously adjustable. A dampener element, such as an adjustable viscous shock absorber, exerts a dampening force on the plate. Up and down pivoting movement of the plate effectively prevents shock impulses from disturbing the camera. The camera and the plate remain largely stationary, due to inertia, while the vehicle carrying the camera support moves up and down over bumps, cracks, or other irregularities in the floor or ground surface. A horizontal isolator · isolates the camera from horizontal impulses using a pendulum-like dampened movement.

A leveling linkage can be used to compensate for angulation caused when the crane or dolly supporting the camera rolls over an irregularity on the ground or floor. Accordingly, with the camera support mounted on a crane or dolly, the elevation angle of the camera lens is better maintained as the crane or dolly rolls over irregularities in the floor surface. The adjustment feature allows the leveling system to be substantially matched with the wheel base of the camera dolly or crane, to reduce angulation effects.

The invention resides as well in sub-combinations and sub-systems of the features, elements, and method steps described. Importantly, each of the features listed above can be used as an improvement in a conventional crane or camera design. Alternatively, they may be used in various combinations with each other. For example, the vertical and horizontal axis isolators can be used alone, or in combination with each other.

### BRIEF DESCRIPTION OF THE DRAWINGS

In the drawings, wherein the same reference number indicates the same element in each of the views:
Fig. 1 is a side view of a novel telescoping crane, mounted on a mobile base or vehicle, with the crane in the retracted position.
Fig. 2 is a side view of the crane shown in Fig. 1, with the arm now fully extended.
Fig. 3 is a partial perspective view showing various components of the crane arm shown in Figs. 1 and 2.
Fig. 4 is a plan view of the crane arm shown in Fig. 1.
Fig. 5 is an enlarged side view of the crane arm shown in Fig. 1.
Fig. 6 is a plan view of the present crane arm in the fully extended position.
Fig. 7 is a side view thereof.
Fig. 8 is a partial section view taken along line 8-8 of Fig. 5.
Fig. 9 is a section view taken along line 9-9 of Fig. 6.
Fig. 10 is a partial plan view of the back end of the crane arm shown in Figs. 3-7.
Fig. 11 is a side view thereof.
Fig. 12 is an enlarged plan view of the front end of the second arm section shown in Fig. 6.
Fig. 13 is a side view thereof.
Fig. 14 is an enlarged plan view of features shown in Fig. 4.
Fig. 15 is a side view thereof.
Fig. 16 is an enlarged side view of the front end of the crane arm shown in Figs. 2 and 7.
Fig. 17 is a plan view thereof.
Fig. 18 is an enlarged plan view, in part section, of the crane arm in the retracted position, as shown in Figs. 4 and 5.
Fig. 19 is an enlarged side view, in part section, of the nose plate of the present crane arm.
Fig. 20 is a plan view thereof.
Fig. 21 is a top view of a roller bracket assembly for installation in the front end of the second section, as shown in Figs. 12 and 13.
Fig. 22 is a side view of the roller bracket shown in Fig. 21.
Fig. 23 is a perspective view diagram showing the second or a center section drive cable connecting the counter weight carrier and the center tube.
Fig. 24 is a perspective diagram showing the top extending cable.
Fig. 25 is a perspective diagram showing the upper retracting cable.
Fig. 26 is a perspective diagram of the leveling system.
Fig. 27 is a schematic diagram of the hydraulic cylinder shown in Figs. 3 and 10 connected to a hydraulic control valve.
Fig. 28 is a side view of the hydraulic cylinder shown in Fig. 27.
Fig. 29 is a schematic diagram showing connections of the control valve to other hydraulic components.
Fig. 30 is a schematic diagram showing the entire hydraulic system of the crane arm shown in Figs. 1-7.
Fig. 31 is a top view of the base section of the hydraulic valve shown in Fig. 27, and further showing connections between ports of the base section and the hydraulic cylinder shown in Figs. 27 and 28.
Fig. 32 is a section view taken along line 32-32 of Fig. 31.
Fig. 33 is an enlarged section view of the valve assembly shown in Figs. 27 and 30.
Fig. 34 is a section view taken along line 34-34 of Fig. 33.
Fig. 35 is an enlarged section view of the piston within the hydraulic cylinder shown in Fig. 10.
Fig. 36 is a top view of the motor and valve assembly shown in Fig. 30.
Fig. 37 is a front view thereof.
Fig. 38 is a side view thereof.
Fig. 39 is a top view of a telescoping crane having an alternative drive system.
Fig. 40 is a schematic perspective of an alternative telescoping crane having a mechanical stopping position system, and automatic camera platform stabilizing or leveling systems.
Fig. 41 is a side view of the hydraulic stabilizing actuator shown in Fig. 40.
Fig. 42 is a top view of mechanical stopping position system shown in Fig. 40.
Fig. 43 is a section view taken along line 43-43 of Fig. 42.
Fig. 44 is a top view of another embodiment having a roll or dutch axis stabilization system.
Fig. 45 is a side view of a camera support or isolator used on a camera crane.
Fig. 46 is a top and left side perspective view of the camera support shown in Fig. 45, with the camera shown in dotted lines, and with one of the lateral dampeners, and one of the longitudinal dampeners removed, for purpose of illustration.
Fig. 47 is a bottom, front, and left side view of the camera support shown in Fig. 46, and with one of the lateral dampeners, and one of the longitudinal dampeners removed, for purpose of illustration.
Fig. 48 is a plan view of the camera support shown in Figs. 46 and 47.
Fig. 49 is a side view of the camera support shown in Figs. 46-48, with the camera support shown in a downward orientation, before tensioning of the springs.
Fig. 50 is a side view of the camera support shown in Fig. 49, with the spring and turnbuckle removed, to illustrate the dampener.
Fig. 51 is a side view of the isolator, as shown in Fig. 49, with the isolator now in a level position after tensioning of the springs.
Fig. 52 is a side view of the isolator, as shown in Fig. 51, with the spring and turnbuckle removed for purpose of illustration.
Fig. 53 is a schematic diagram showing operation of the isolator shown in Figs. 46-52.
Fig. 54 is a schematic diagram showing reduction of angulation.
Fig. 55 is side view of the isolator shown in Figs. 46-52 in use without the horizontal isolator assembly.
Fig. 56 is a plan view of an alternative horizontal isolator assembly design.
Fig. 57 is side view of the alternative horizontal isolator assembly shown in Fig. 56.
Fig. 58 is a side view of an alternative assembly for isolating a camera from horizontal shock and vibration impulses.
Fig. 59 is a top view of the assembly shown in Fig. 58, with the camera and head removed for purpose of illustration.
Fig. 60 is an enlarged top view of the assembly shown in Fig. 59, with the head plate removed for purpose of illustration.
Fig. 61 is a side view of the assembly shown in Fig. 60.
Fig. 62 is a side view of the assembly shown in Figs. 58-61 as mounted on the mobile camera crane shown in Fig. 45.
Fig. 63 is a perspective view of a crane arm balancing system installed on a fixed length or segment/section assembled crane.
Fig. 64 is a side view of the crane arm balancing system shown in Fig. 63 installed on a telescoping crane.
Fig. 65 is a section view of the crane arm balancing system shown in Fig. 63.
Fig. 66 is a plan view of the crane arm balancing system shown in Fig. 64, with only the fixed crane arm section or tube shown, for clarity of illustration.
Fig. 67 is a side view of the crane arm balancing system shown in Fig. 66.

### DETAILED DESCRIPTION OF THE DRAWINGS

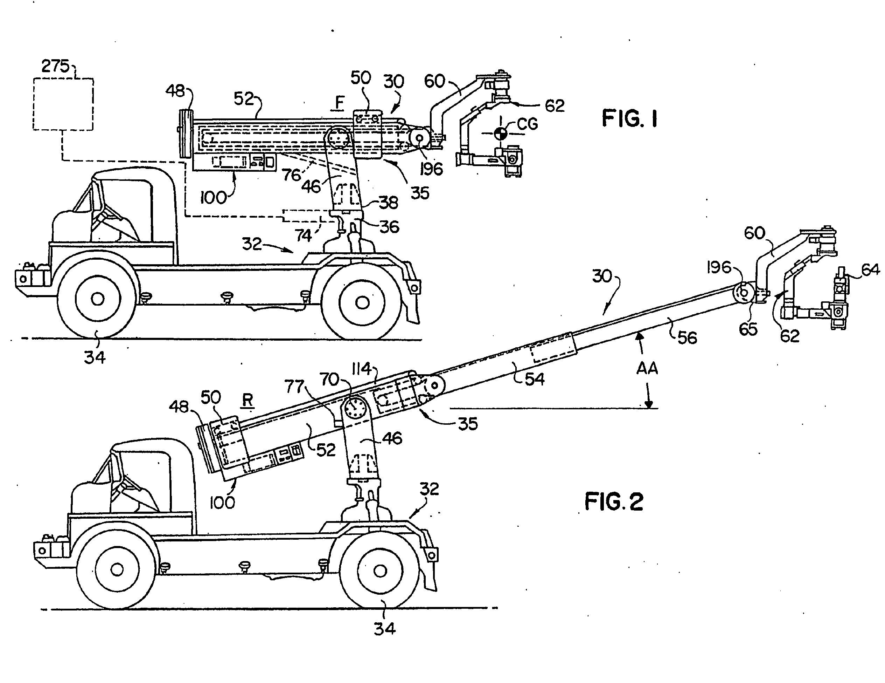

Turning now in detail to the drawings, as shown in Figs. 1 and 2, a telescoping crane 30 is mounted onto a mobile base 32. The mobile base 32 may be a truck or road vehicle, or a motorized special purpose camera crane base or dolly. Typically, the mobile base 32 will have wheels 34 which drive and steer the mobile base. Four-wheel drive and four-wheel steering may be provided. For smaller scale cranes 30, e.g., up to about 5 meters (15 feet), the mobile base 32 may be un-motorized, and may be moved or pushed by hand. For larger versions of the telescoping crane 30, or when required due to ground conditions or other use requirements, the mobile base 32 can have electric motors, or internal combustion engines, for driving the wheels 34.

As shown in Figs. 1 and 2, the crane 30 is mounted on a column 36 on the mobile base 32. The column 36 may be automatically leveled, as described below, or in any other suitable manner, to maintain the crane 36 in a level orientation as the mobile base 32 moves over uneven ground.

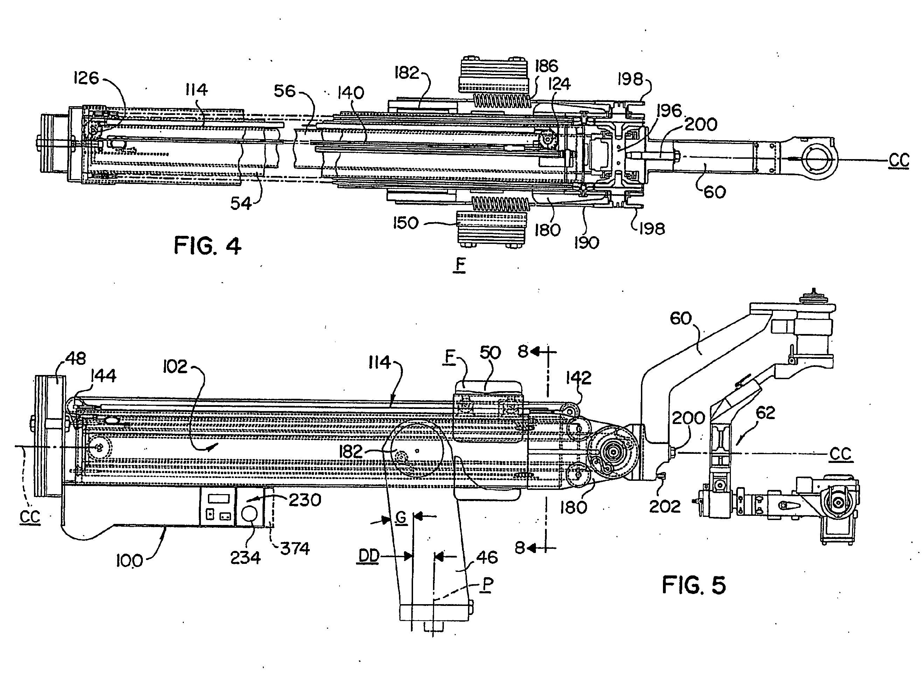

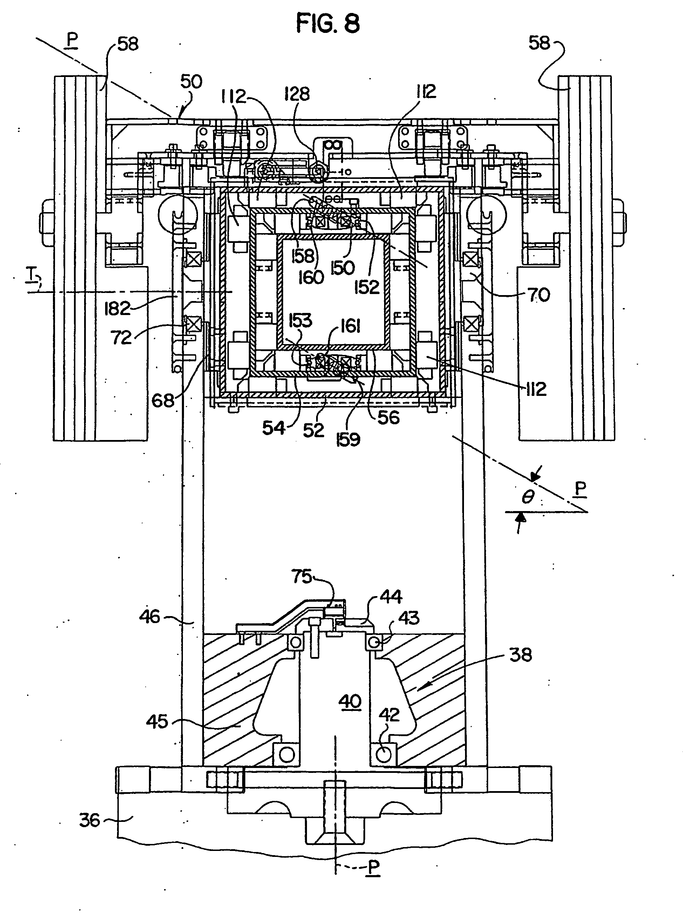

A U-shaped center post 46 is rotatably mounted on the column 36. As shown in Fig. 8, a post 40 on the column 36 extends up through a lower column bearing 42 and an upper column bearing 43 secured within a post ring 45 of the center post 46. A cap nut 44 is attached, e.g., threaded, onto the top end of the column post 40, to securely attach the center post 46 onto the column 36 of the mobile base 32, while still allowing the center post 46 of the crane 30 to rotate. As shown in Fig. 5, the center post 46 extends up at a rearward angle G, so that the tilt axle 70 is offset behind the pan axis P by a distance DD. This offset, which helps to keep the center of gravity of the arm 35 centered over the pan axis bearings 42 and 43, varies with the arm design, and typically is 2-8 cm (1-3 inches). The corresponding angle. G is generally 5-15 degrees. An optional potentiometer or angular position sensor 75 has a base attached to the fixed or non-rotating column post 40, and a body linked to and rotatable with the center post 46, to provide an electrical output signal to a controller, such as a control box 275, as shown in Fig. 1.

Referring back to Figs. 2 and 8, a crane arm 35 is supported on a tilt axle 70 which is pivotably supported on the center post 46. Consequently, the crane arm 35 can rotate about a pan axis P, and can also pivot about a tilt axis T, as shown in Fig. 8.

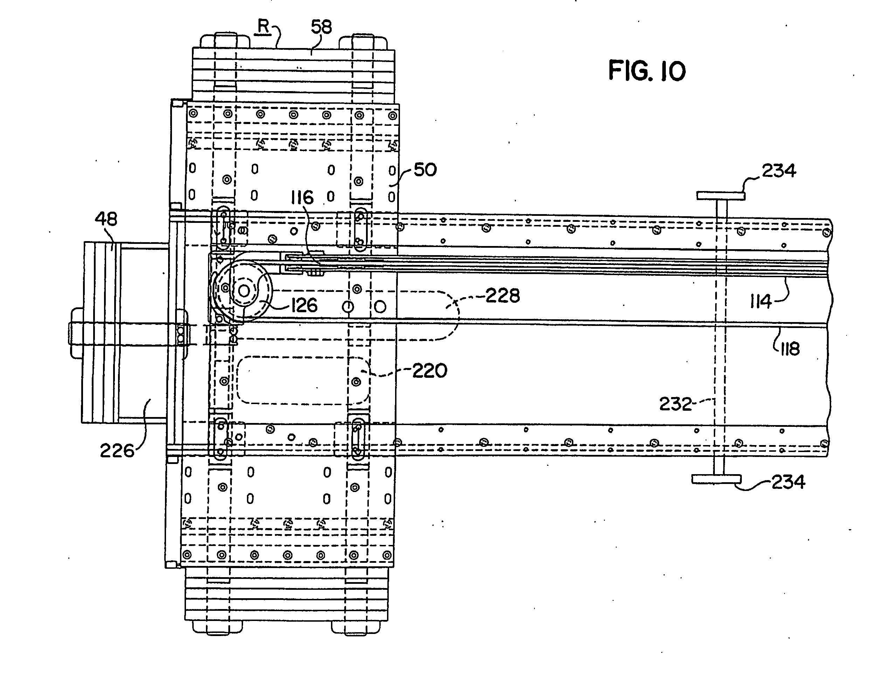

Referring to Figs. 1-11, the crane arm 35 includes a first or outer section 52; a second or middle section 54, and a third or inner section 56. As shown in Fig. 8, the first section 52 is supported on the tilt axle 70 via an axle bearing 72 Fixed or non-moving trim weights 48 are placed at the back end of the first section 52. The trim weights 48 may or may not be needed or used, depending on whether non-moving weight from e.g., accessories, is added to the arm in front of the tilt axle.

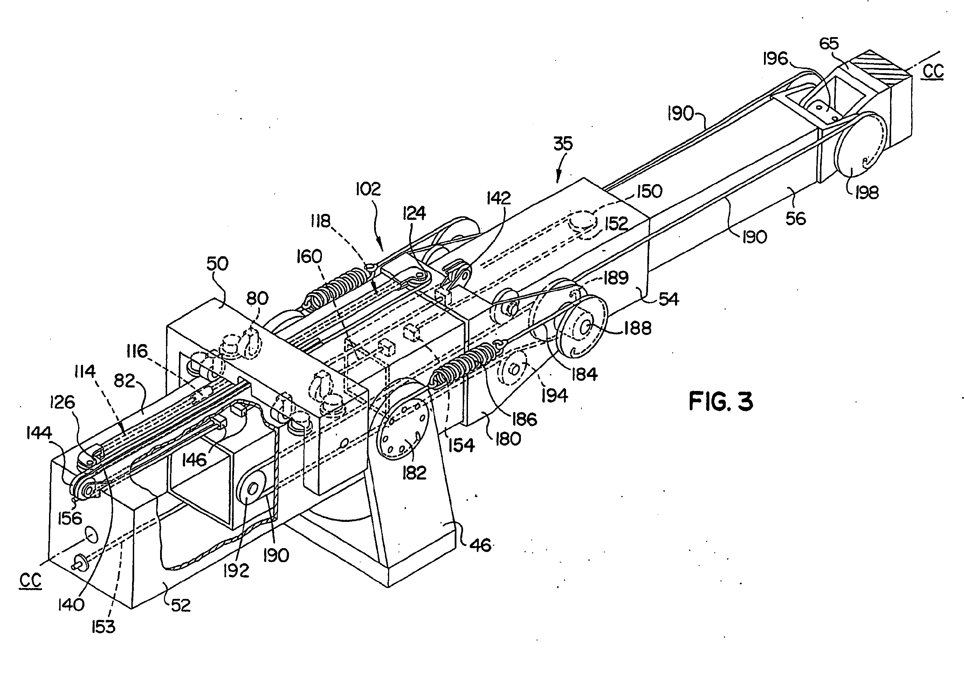

A counter weight carrier or tray 50 is movable along the top of the first section 52, from a front or forward position F, when the arm 35 is fully retracted, as shown in Figs. 1, 4, and 5, to a rear or back position R, when the arm 35 is fully extended, as shown in Figs. 2, 6, and 7. Moving or mobile counter weights 58 are attached to the counter weight carrier 50. As shown in Figs. 3, 8, and 9, the counter weight carrier 50 has top rollers or wheels 80 which roll on a roller track 82 attached to the top surface of the first section 52. The counter weight carrier 50 also has side rollers or wheels 84 which roll along the sides of the roller track 82. The top rollers 80 support the weight of the counter weight carrier 50 and moving counter weights 58, and allow the counter weight carrier 50 to roll between the front and rear positions witch low force. The side rollers 84 keep the counter weight carrier 50 aligned, side to side, on top of the first section 52, and secure the counter weight carrier vertically against upward movement.

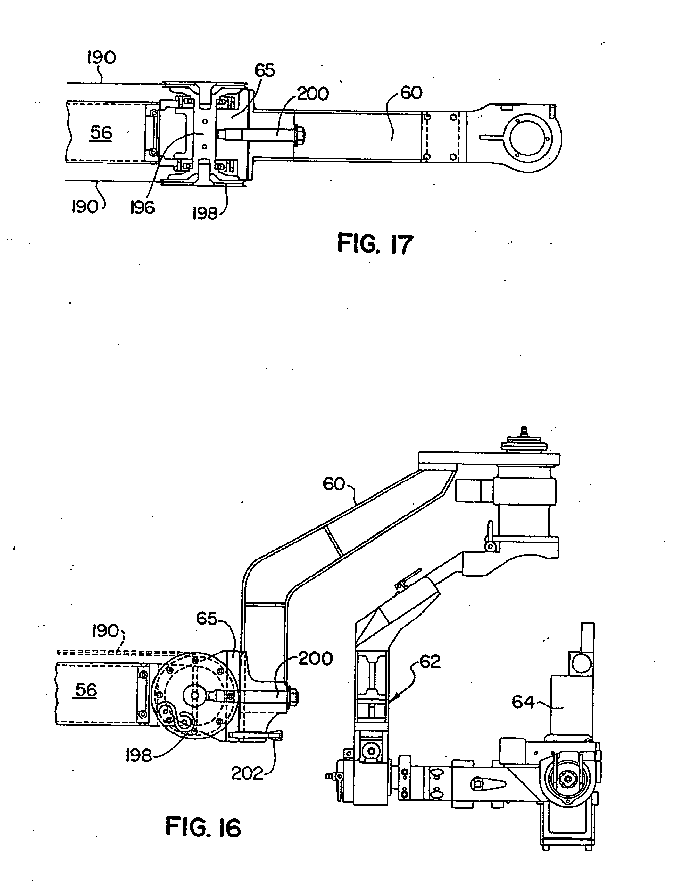

Referring to Figs. 2, 6, 7, 16, 17, 19, and 20, a nose plate 65 is attached to a nose axle 196 pivotably attached at the front end of the third section 56. A riser or extension 60 can be attached to the nose plate 65 with a mounting bolt 200 and a quick release position pin 202.

In the configuration shown, an extension 60 is used, and a remote camera head 62 is attached at the front end of the extension 60. Alternatively, other camera support plates, risers, drop downs or accessories may be attached directly to the nose plate 65, with no extension 60 and/or camera head 62 being used. In the configuration shown, a camera 64 is attached to a camera platform on the camera head 62. The camera head 62, if used, can provide controlled angular camera movement about pan, tilt, and roll axes, independent of movement of the crane arm 35.

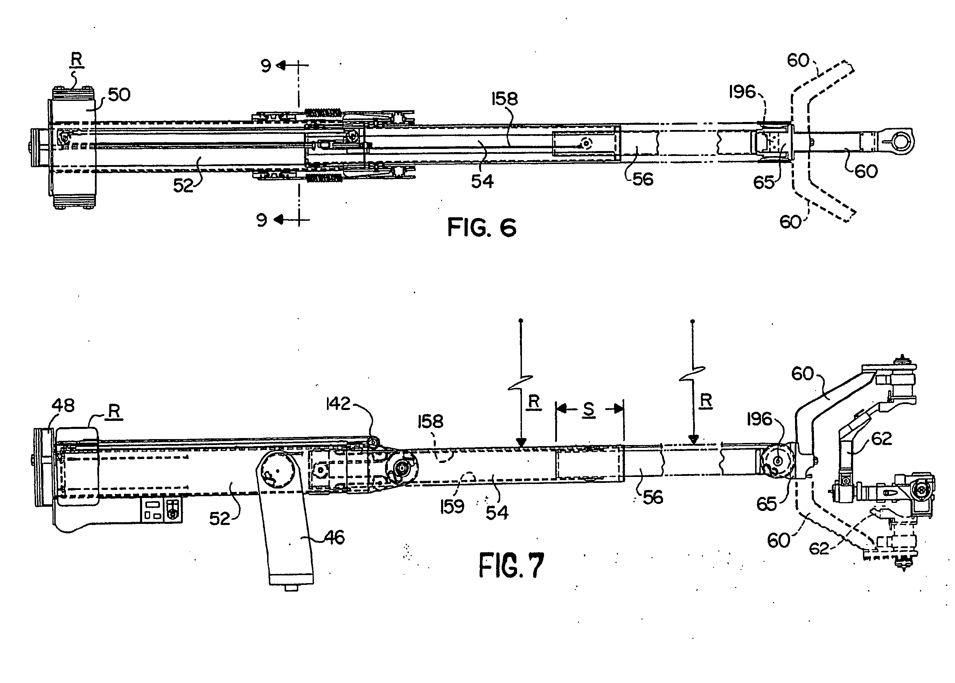

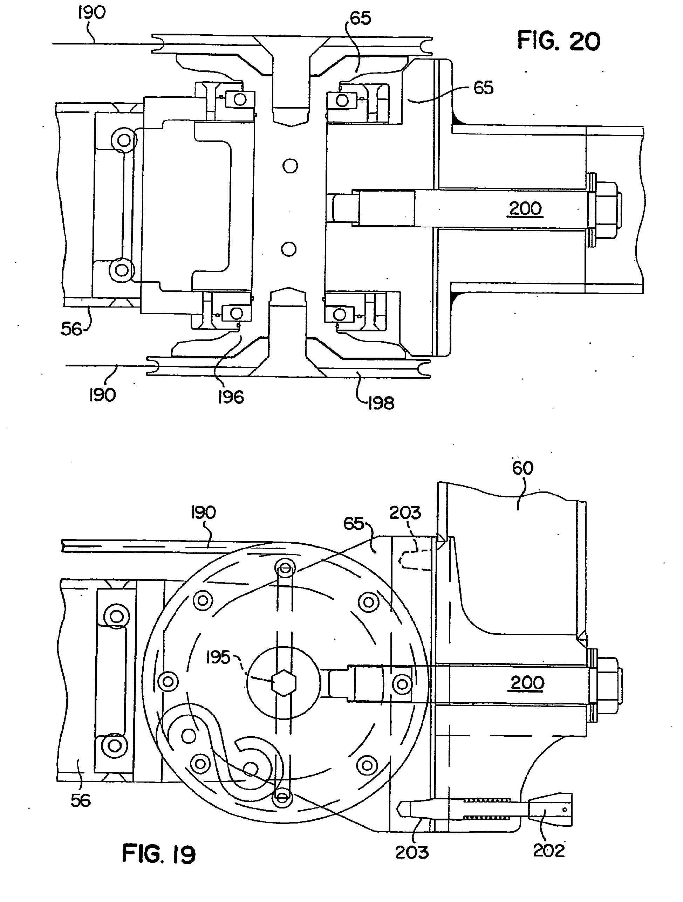

Referring to Fig. 19, the nose plate 65 has four or more preferably equally radially spaced-apart positioning holes 203. The extension 60 and camera head 62 can be moved from the upright or overslung position, shown in solid lines in the drawings, to an inverted or underslung position, as shown in dotted lines in Fig. 7, or to a 90 degree position, as shown in dotted lines in Fig. 6, by loosening the mounting bolt 200, withdrawing the spring-based position pin 202, then turning the extension 60 to the desired position, releasing the position pin 202, and retightening the bolt 200. These alternate positions provide added range of camera movement. In addition, the 90 degree positions are useful in balancing the camera head 62.

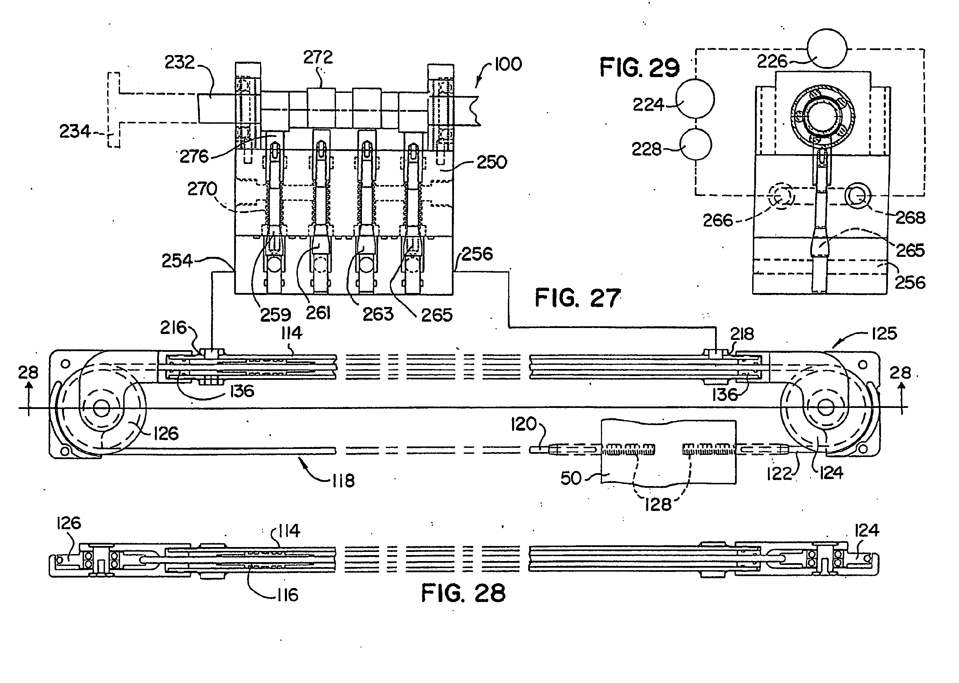

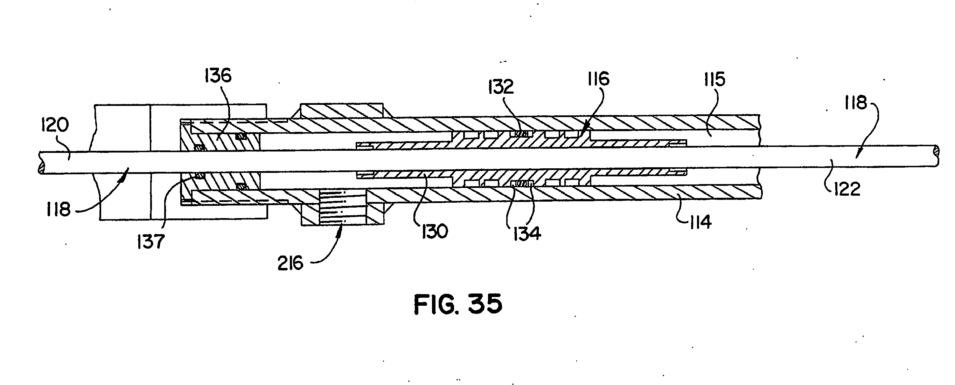

The crane 30 has a hydraulic system 100 which provides the driving force for extending and retracting the crane arm 35. Referring to Figs. 2, 3, and 27-30, the hydraulic system 100 includes a hydraulic cylinder 114 attached to the top of the first section 52. A hydraulic cylinder cable 118 extends through the hydraulic cylinder 114. A first end 120 of the cable 118 extends out through a rear cable seal 136, as shown in Figs. 27 and 35, and extends around a rear hydraulic cylinder cable pulley 126, and is attached to the counter weight carrier 50 via a cable tie, clamp, or turnbuckle 128. Similarly, a second end 122 of the hydraulic cylinder cable 118 extends forward through the hydraulic cylinder 114 from the piston 116, through a front cable seal 136, extends around a front hydraulic cylinder cable pulley 124, and is attached to the counter weight carrier 50, also via a cable tie, clamp, or turnbuckle 128. The cable seals 136 allow the cable 118 to slide through while sealing hydraulic fluid within the cylinder 114.

The hydraulic cylinder cable 118 is attached to a piston 116 which is movable back and forth within the hydraulic cylinder 114. As shown in Fig. 35, the piston 116 has front and rear piston crimp extensions 130 which are tightly crimped onto the cable 118. Of course, other attachments, such as screw threads, welding, adhesives, clamping, etc., may equivalently be used.

Referring still to Fig. 35, a piston seal or O-ring 132, backed by plastic or Teflon (Fluorine resins) seal rings 134, provides a sliding seal between the piston 116 and the cylindrical inside walls of the hydraulic cylinder 114. The hydraulic cylinder cable 118 advantageously has internal twisted bundles of high strength filaments, fibers, or wires, surrounded by a plastic or vinyl covering or sheath. The ends of the cylinder 114 are sealed with an end cap or plug 136.

An O-ring 137 in the end cap seals around the smooth covering on the cable, while allowing the cable to slide in and out of the cylinder. As hydraulic fluid pressure is exerted against either the front or back side of the piston 116, as described below, the piston 116 moves through the hydraulic cylinder 114, correspondingly moving the counter weight carrier 50 in the opposite direction. The hydraulic system 100 also includes other components for driving and controlling the hydraulic cylinder 114.

The design and operation of these other hydraulic system components, which are generally located within a hydraulic system enclosure or housing 106 attached to the bottom of the first section 52, is described below. As shown in Fig. 27, the hydraulic cylinder 114, pulleys 124, 126, and cable 118 are provided as assembly 125.

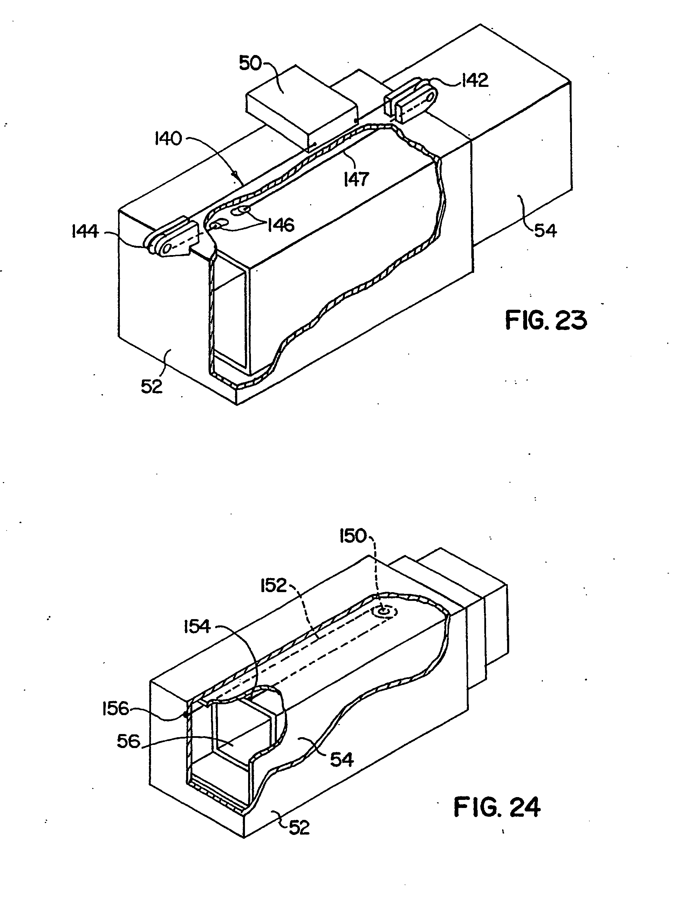

The crane arm 35 also includes a drive system 102, which extends and retracts the second section 54 and the third section 56, upon actuation of the hydraulic cylinder 114. Referring to Figs. 3 and 23, a second section rear drive cable 140 (or pair of side-by-side cables) is attached to the top surface of the second section 54, via a cable tie, clamp, or turnbuckle 146, adjacent to the back end of the second section 54, extends around a rear pulley 144 attached to the back end of the first section 52, and is attached near the back end of the second section 54.

A second section forward drive cable 147 is attached to the counter weight carrier 50, extends forward around a front pulley 142, supported near the front end of the top surface of the fist section 52, and is attached to the top surface of the second section 54, near the back end of the second section 54. Consequently, as the counter weight carrier 50 moves along the top of the first section 52, the second section 54 is moved by an equal amount, in an opposite direction.

The drive system 102, as shown in Figs. 3 and 24, also includes a top extending cable 152, and a symmetrical or mirror image or bottom extending cable 153, shown in profile in Fig. 8. As shown in Fig. 24, the back end of the top extending cable 152 is attached to a back wall of the first section 52 at a cable anchor or tie point 156. The top extending cable 152 extends forward, between the second section 54 and the third section 56, runs around a top drive pulley 150, secured to the inside top surface of the second section 54, and is attached at the rear top surface of the third section 56, via a cable anchor or turnbuckle 154. The top drive pulley 150 is mounted on the top inside surface of the second section 54, near the front end of the second section 54. The bottom extending cable 153 has the same design.

As the second section 54 is extended out of the first section 52, via movement of the counter weight carrier 50 driven by the hydraulic cylinder 114, the drive pulleys 150 (one each on the top and bottom of the second section 54) pull the third section 56 out of the second section 54. Accordingly, when the hydraulic cylinder 114 is actuated to extend the crane arm 35, the third section 56 extends out of the second section 54 by the same amount (and in the same direction) as the second section 54 extends out of the first section 52. This rearward movement of the counter weight carrier 50 forces the forward movement of the third section 56 at double the (rearward) movement of the counter weight carrier.

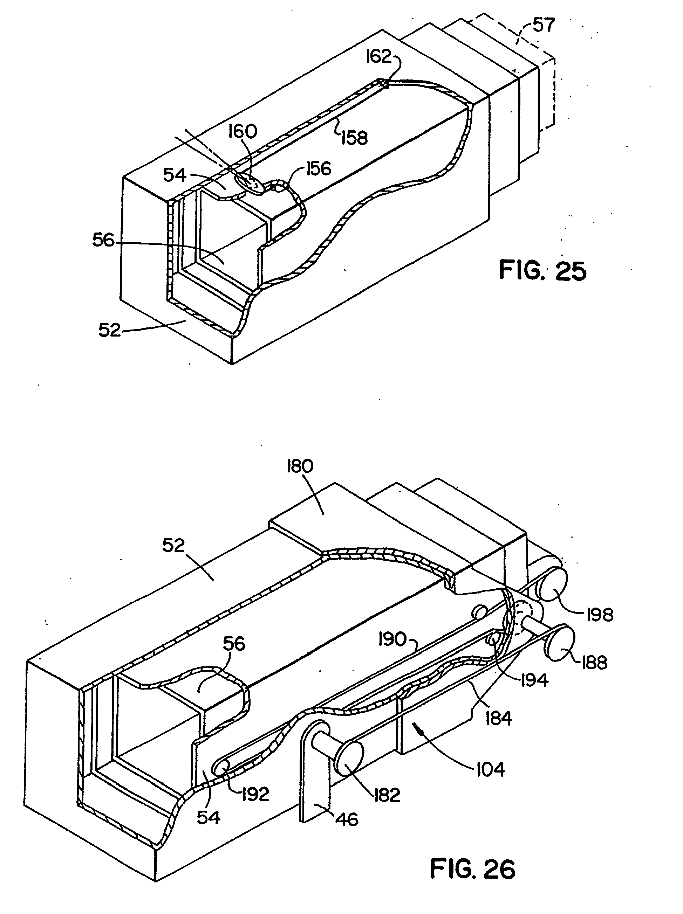

The drive system 102 also includes a top retraction or pull back cable 158, and a bottom retraction or pull back cable 159, as shown in Figs. 8 and 25. Referring to Fig. 25, the first or front end of the top pull back cable 158 is attached to the top inside surface of the fi rst section 52, with a cable anchor or turnbuckle 162. The top pull back cable 158 then extends rearwardly, between the first section 52 and the second section 54, to a retraction pulley mounted on the top back end of the second section 54.

For purposes of illustration, the bottom extension and retraction cables and pulleys are not shown in Figs. 24 and 25. However, they are duplicates of the top cable and pulley designs shown in Figs. 24 and 25. Top and bottom cables and pulleys are used to provide precise, smooth, and more evenly balanced telescoping movement of the sections. However, single cable designs may also be used. Chains and sprockets may also be used in place of cables and pulleys.

The top retraction or pull back cable 158 extends around the top retraction pulley 160, passes through the slot or opening in the second section, and is attached to the top back end of the third section 56 with a cable anchor or tie 156. The bottom pull back cable 159 has the same design. Both retraction or pull back pulleys 160 and 161 are oriented in a plane P at an angle of 20-45 degrees, preferably 30 degrees, to allow the pulleys to fit within a compact space between the second and third sections, as shown in Fig. 8.

Referring momentarily to Fig. 25, as the second section 54 is retracted or pulled back into the first section 52, via the hydraulic cylinder 114 moving the counter weight carrier 50, the top and bottom retraction pulleys 160 and 161 on the second section 54 move rearwardly with the second section 54, pulling the third section 56 back into the second section 54.

Turning momentarily to Fig. 7, with smaller versions of the crane arm 35 (e.g., having an extended length of about 5 meters (15 feet), as measured from the tilt axle 70 to the nose axle 196), the moving sections 54 and 56 may be straight. For longer versions of the crane arm 35, the second and third sections 54 and 56 are advantageously formed with a slight upward radius of curvature R. The radius R will vary, depending on bending and deflection characteristics of the sections. Stiffer sections (i.e., having a shorter length, thicker walls, or greater moment of inertia) will have less curvature, i.e., R will be greater.

As one example, where the second and third sections are 20 cm (8 inch) and 15 cm (6 inch) square aluminum tubes, each about 430 cm (170 inches) long (i.e., for a crane arm having an extended length of about 10 meters (31.5 feet), R is preferably 33000-38000 cm (8,000-20,000, 10,000-18,000, or 13,000-15,000 inches). This upward curvature helps to compensate for sagging of the arm 35 when loaded. With an average payload of about 70 kg (150 pounds) (including the camera 64, camera head or frame 62 and extension 60), and with the arm 35 at a 30° elevation angle, the upward curvature R offsets the bending defection, and the arm 35 is straight. With different payloads and elevation angles, the arm 35 will curve slightly up or down, but it will always be straighter than an arm without any fault in upward compensating curvature R. Having the arm 35 remain straighter improves performance because it helps to keep the center of gravity of the payload centered on the central axis of the arm 35. Consequently, the arm 35 is less subject to eccentric loads or torsional loading, resulting in a more stable camera platform. In addition, the straighter arm 35 is more easily kept in balance.

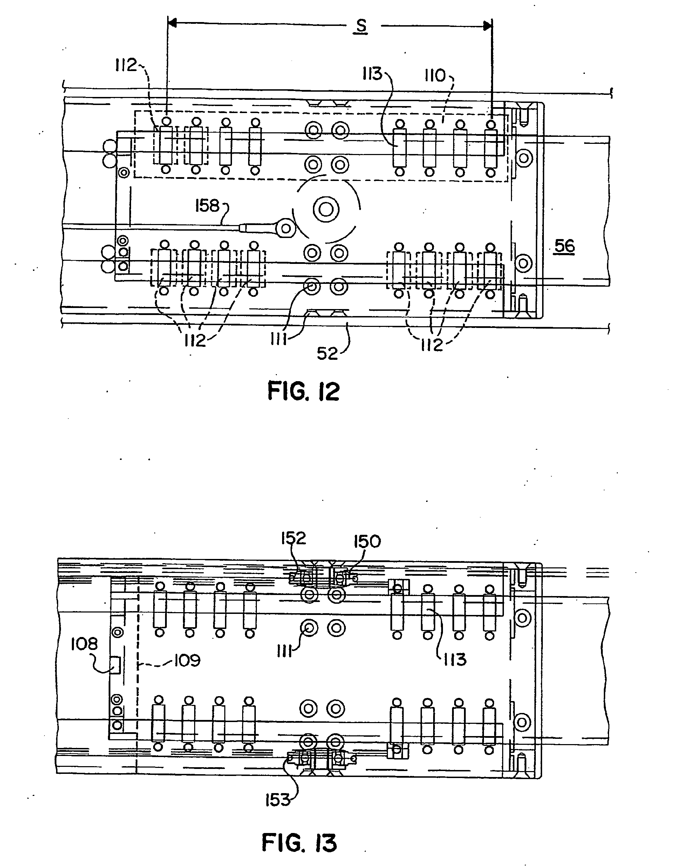

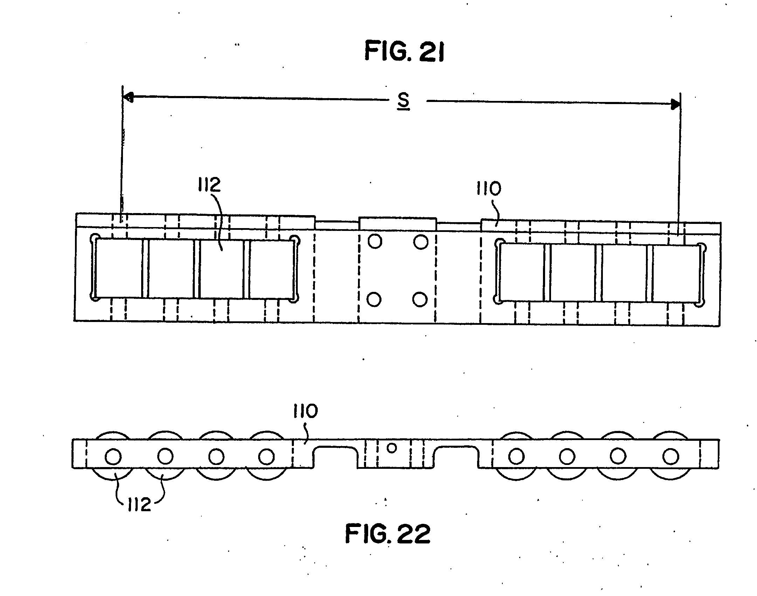

Referring to Figs. 12, 13, 21, and 22, the third section 56 is supported within the second section 54 by rollers 112 mounted on roller mounting plates or brackets 110. The roller brackets 110 are attached to the inside surface of the front end of the second section 52. Specifically, two roller brackets 110 are attached to the top, bottom, left, and right interior sides of the front end of the second section 52, for a total of 8 roller brackets. As shown in Figs. 12 and 21, the roller spread or footprint, i.e., the distance S between the front and rear rollers, is minimized. This reduces the overlap between the second section 54 and the third section 56 when the crane arm 35 is fully extended. Consequently, the crane arm 35, while typically having only 2 moving sections, has an increased reach, while also remaining relatively compact when retracted.

The rollers 112 are preferably made of a relatively soft plastic or non-metal, preferably having a Shore hardness of 70-90. This provides for smooth and quiet rolling between the sections. In addition, the rollers 112 help to absorb and reduce transmission of vibration between the sections. The rollers 112 and brackets 110 are similarly used to telescopically support the second section 54 within the first section 52. For larger versions of the crane arm 35, the dimension S is increased, to better carry larger loads. As examples, for a crane arm 35 with about a 15 foot length (measured from the tilt axle to the nose axle) the dimension S is about 30 cm (11 or 12 inches). With a crane arm having a length of about 9-10 meters (30 or 31 feet), the dimension S is about 60 cm (23 or 24 inches). The brackets 110 are advantageously bolted into position and fit tightly around the section they support.

As shown in Figs. 12 and 13, cutouts, grooves, or recesses 113 may be made in the sections, to provide clearance for the rollers 112. For clarity of illustration, only one of the brackets 110, and only some of the rollers 112, are shown in Fig. 12, and they are omitted entirely from Fig. 13. The arm sections 52, 54, and 56 are preferably hard anodized, to provide a hard surface for the rollers 112 to roll on. Felt, or non-absorbing nitrile, rubber, or plastic strips or wipers may be attached around the openings of the first section 52 and the second section 54, to wipe the second section 54 and the third section 56 as the crane arm 35 extends and retracts.

A mechanical stop 108 at the back end of the third section 56 contacts a bracket 109 on the second section 54 to provide a hard mechanical stop and to limit the extension of the third section 56 out of the second section 54. The extension of the third section 56 out of the second section 54 is also limited by the length of the extension cables 152 and 153.

Referring to Fig. 8, the first section 52, second section 54, and third section 56 are preferably each square or nearly square aluminum tubes. In the design shown in the drawings, which provides an extension of travel length of approximately 285 cm (112 inches), the first section is a 25 x 27 cm (10 x 10 3/4 inch) square tube, the second section is an approximately 20 cm (8 inch) square tube, and the third section is an approximately !5 cm (6 inch) (outside dimensions) square tube. Larger and smaller versions can of course also be made. The sections may be formed as extrusions, weldments, bolted plates, or in similar ways. Drain holes may be provided in the sections 52 and 54, to reduce buoyancy forces when they are submerged. As shown in dotted lines in Fig. 25, a fourth section 57 may also be used, as a third moving section, to further increase the reach of the arm. The size, shape, and number of telescoping sections, material selections, actuator (e.g., hydraulic, electric, etc.) type, attachment techniques, and accessories are not essential to the invention and can be changed.

The crane arm 35 includes a leveling system 104 to maintain the nose plate 65, and any accessory attached to it, such as the extension or riser 60 and the camera head 62, in a horizontal or level orientation, regardless of the elevation angle AA (shown in Fig. 2) of the crane arm 35. The leveling system 104 consequently maintains the camera 64, supported directly or indirectly by the nose plate 65, in a horizontal position.

Referring now to Figs. 3, 14, 15, 19, 20, and 35, the leveling system 104, on the right side of the crane arm 35, includes a cable pulley 182 rigidly attached to the center post 46. The back end of a spring cable 184, which includes a spring 186, is attached to the cable plate 182. The front end of the spring cable 184 is attached to a rear leveling axle assembly 188. The rear leveling axle assembly 188 is pivotably supported on the front end frame 180 attached to the front end of the first section 52. A first end 189 of a leveling cable 190 is attached to an inside pulley on the rear leveling axle assembly 188. The leveling cable 190 extends rearwardly from the axle assembly 188, over an idler 194, around a rear leveling cable pulley 192 rotatably attached to the rear right side of the second section 54, and then extends forward under a second idler 194 and is attached to a nose pulley 198 joined to the nose axle 196. The same components are symmetrically provided on the left side of the crane arm 35.

Referring to Figs. 19 and 20, the leveling cable 190 wraps around the nose pulley 198, and is attached to, e.g. clamped within, the nose pulley 198. Referring to Figs. 2 and 3, the weight of the payload, e.g., the camera 64, as well as any camera head 62 or extension 60, if used, exerts a downward or clockwise (in Figs. 2 and 3) torque acting on the nose axle 196. Consequently, the leveling cable 190 and spring cable 184 are typically maintained under constant tension. The spring 186 is selected with a spring constant to provide a level of flexibility in the leveling system 104.

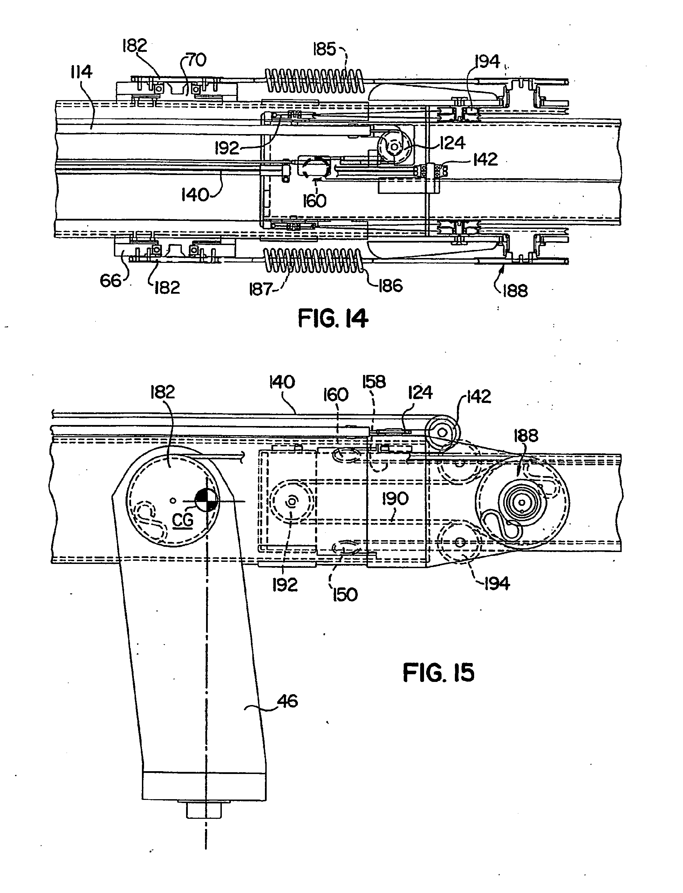

In the event that the nose plate 65, extension 60, or camera head 62 is moved forcefully into an overhanging surface or ceiling, the spring 186 extends, allowing the nose plate 65 to move downwardly (clockwise in Fig. 3) to reduce or avoid damage to the crane arm 35, extension 60, or camera head 62. The spring 186 may be omitted, or it can be locked out by a rigid cable link 185, or dampened with a shock absorber 187, shown in dotted lines in Fig. 14.

During extension of the crane arm 35, the rear leveling cable pulley 192, which is attached to the second section 54, moves forward at one-half the rate of the nose pulley 198 supported on the third section 56. Accordingly, tension in the leveling cable 190 is not affected by extending or retracting the crane arm 35. A clutch 195 may also be provided between the nose axle 196 and the nose pulleys 198, to allow the nose plate 65 to pivot downwardly under excessive momentary loading.

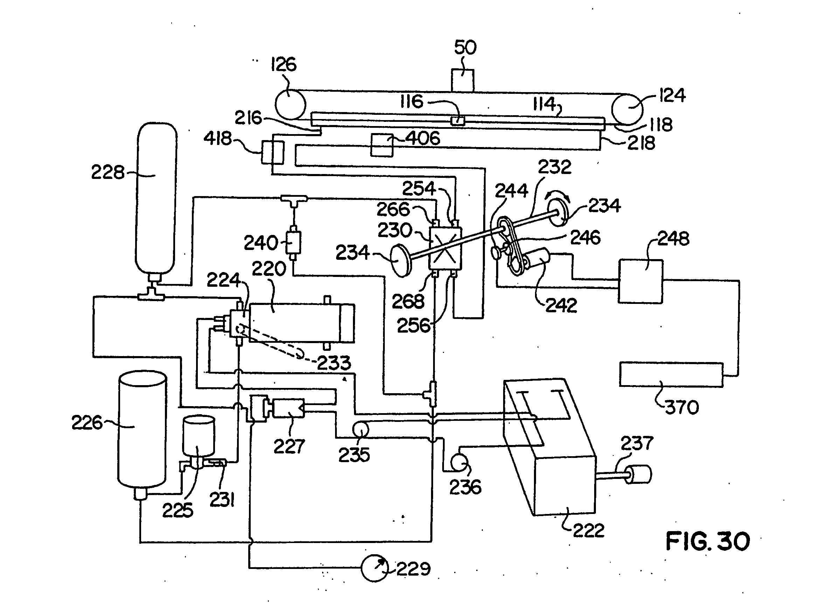

The hydraulic system 100 is shown in detail in Figs. 3, 11, and 27-34. The hydraulic system 100 provides the motive force for moving the counter weight carrier 50 and simultaneously extending or retracting the crane arm 35. In normal and preferred operation, the crane arm 35 is balanced. Forward, or upward, movement of the payload is compensated by rearward or downward movement of the counter weight carrier 50 and the mobile counter weights 58. Accordingly, the hydraulic system 100 generally needs only to overcome forces of friction and inertia, to extend or retract the crane arm 35. As a result, the hydraulic system 100 is compact and energy efficient. The components making up the hydraulic system 100, which are shown in Fig. 30, are preferably contained within the hydraulic system housing 106, except for the hydraulic cylinder 114, which extends along the top surface of the first section 52.

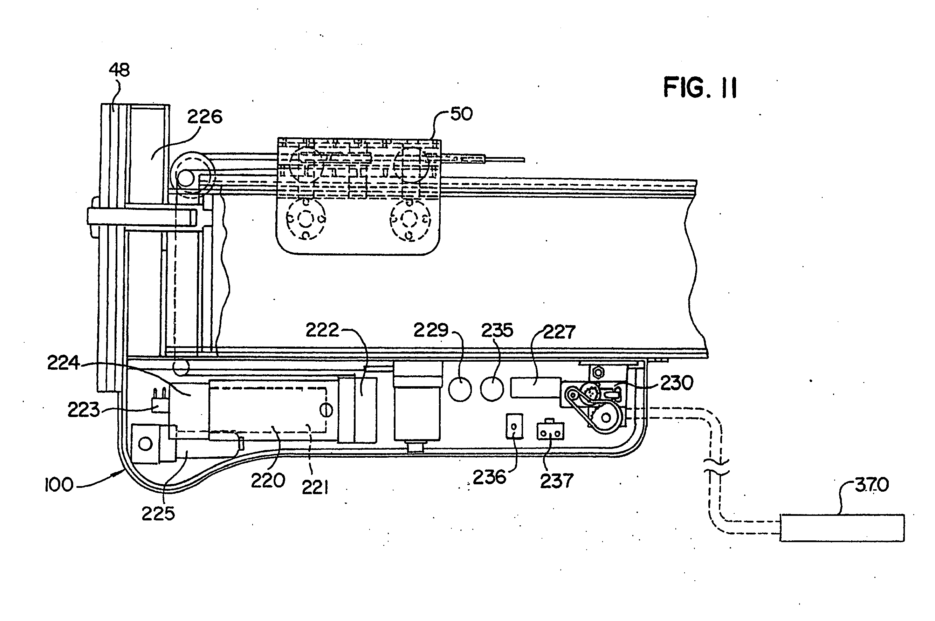

As shown in Fig. 30, a pump 224 driven by an electric motor 220 charges or pressurizes an accumulator 228. Instead of the motor 220, a hand pump 233 may be used. The battery 222 can be charged by an external AC plug-in connection 237. Referring to Fig. 11, a cooling system 221, optionally including a recirculating liquid coolant, such as water, pumped through a radiator, may be provided around the pump motor, to cool the motor.

The accumulator 228 is connected via fluid lines to a valve assembly 230, and also to a pressure switch 227, which automatically switches off the motor 220 when a pressure limit is reached within the accumulator 228. A pressure gauge 229 linked to the accumulator 228 is visible through a window or opening in the enclosure 106. A battery 222 connects to the motor 220 through an on/off switch 236 and the pressure switch 227. An on/off indicator 235 is viewable through a window or opening in the enclosure 106. A relief valve 240 joins into a T-fitting in the line linking the accumulator 228 and the valve assembly 230, to relieve excess pressure in the accumulator 228, and return hydraulic fluid to a reservoir or tank 226. The reservoir 226 provides unpressurized hydraulic fluid, through a filter 225 and a check valve 231 to the inlet of the pump 224.

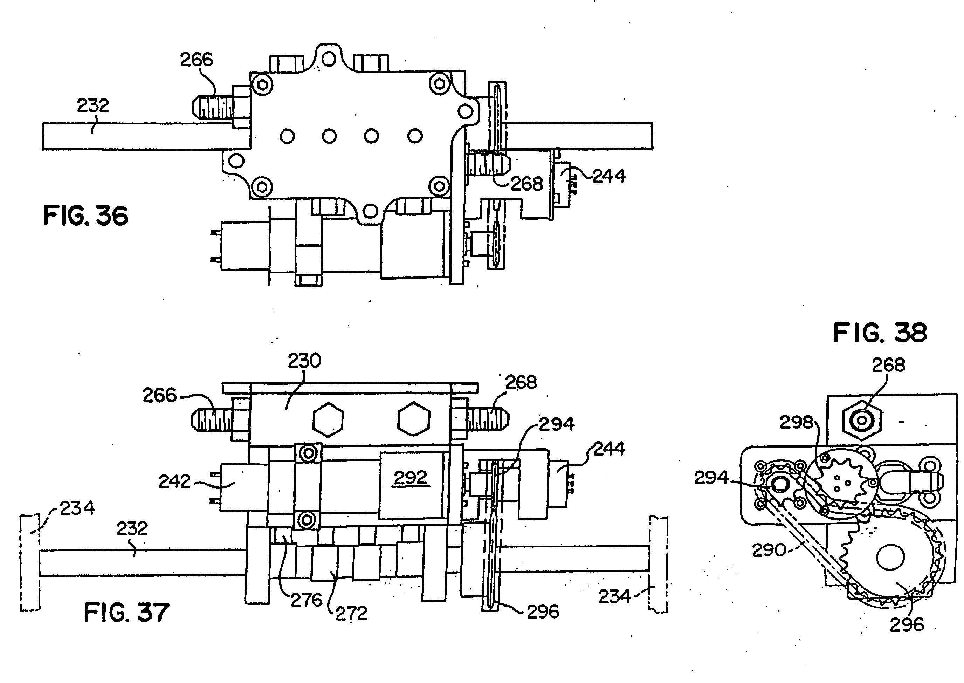

A valve shaft 232 extends through the valve assembly 230. Control knobs 234 are provided at each end of the valve shaft 232, so that the valve assembly 230 can be controlled from either side of the crane arm 35. Referring to Figs. 36-38, a chain or belt 290 connects a shaft sprocket 296 on the valve shaft 232 with a motor sprocket 294 on a valve control motor 242. An adjustment and potentiometer idler sprocket 298 is also engaged with the chain 290, and is linked to a potentiometer 244. The potentiometer 244 and the valve control motor 242 are both connected to an electronic controller 248. The potentiometer 244 has a small cable transducer attached to the counter weight carrier and provides electrical signals to the controller 248 based on position, and speed and direction of movement of the counterweight carrier, which is proportional to the extension position of the arm 35. Stops limit rotation of the valve 230.

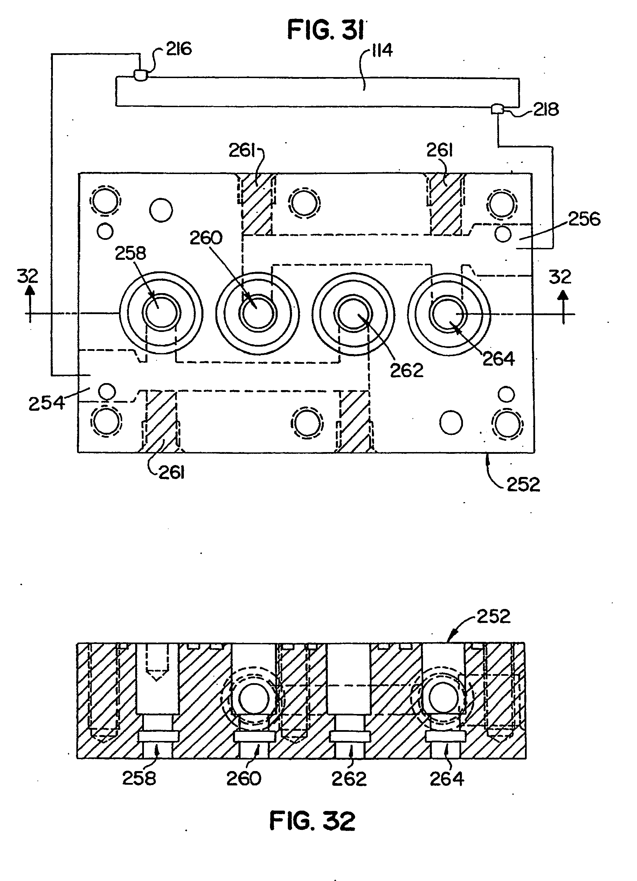

Referring to Figs. 27 and 31-34, the valve assembly 230 includes a valve block 250 attached to a base 252. First, second, third, and fourth valve pins 259, 261, 263, and 265 are positioned within first, second, third, and fourth bores 258, 260, 262, and 264 in the valve block 250 and base 252, forming four valves. The first bore 258 connects with the third bore 262 via a first or rear drive port 254, as shown in dotted lines in Fig. 31. Similarly, the second valve bore 260 connects with the fourth valve bore 264 via a second or front drive port 256, also shown in dotted lines in Fig. 31. Plugs 261 seal drill openings made during manufacture, to provide right angle bends in the internal ports.

The first or rear drive port 254 of the valve assembly 230 is connected to a rear port 216 of the hydraulic cylinder 114. The second or front drive port 256 of the valve assembly 230 is connected via a hydraulic line to a front port 218 of the hydraulic cylinder 114, as shown in Figs. 27 and 31. A high pressure inlet port 266 is connected via a hydraulic line to the accumulator 228. A low pressure inlet port 268 in the valve block 250 is connected via a return hydraulic line to the reservoir 226. Each of the valve pins 259, 261, 263, and 265 is biased upwardly or into a closed position via a spring 270.

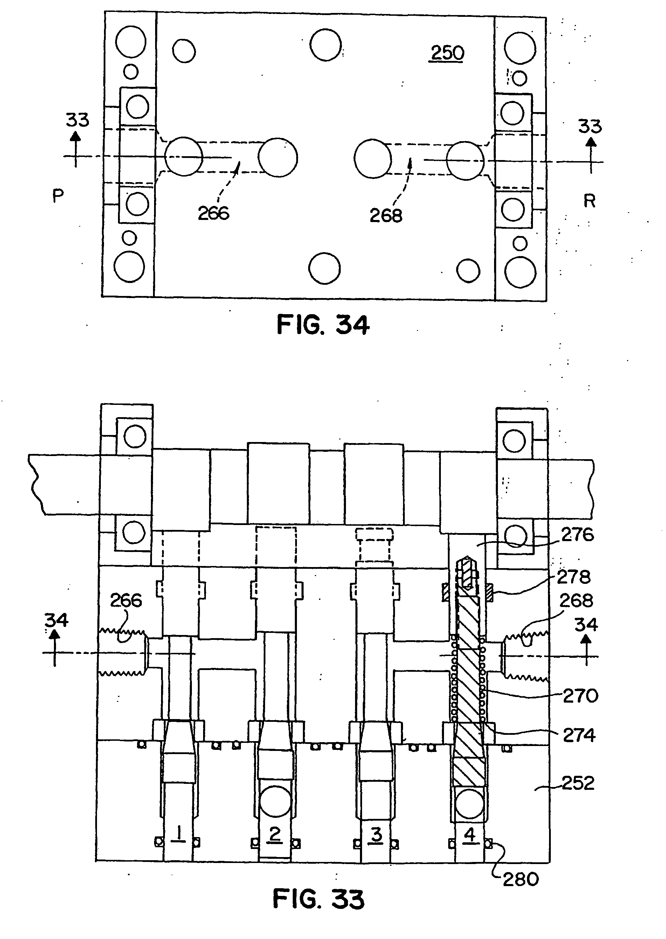

In the up or closed position, a head on the hardened valve pin seals against a hardened valve seat 274 pressed and/or swaged into the valve body at the lower end of each bore. A valve piston 276 is centered on a shoulder and threaded onto each of the valve pins. This design provides a highly reliable and durable seal of each bore which is very resistant to leaking, even at high pressures. The springs 270 bias the valve pistons 276 against cam lobes 272 on the valve shaft 232. Small clearances assure seating of the valve pins in the valve seat, and provide a detent. The cam lobes are preferably 90 degree offset circles, to provide smooth (sinusoidal) movement of the valve pins. As shown in Fig. 33, O-rings 278 and 280 seal the pin bores.

The valve shaft 232 is set up with stops that limit rotation to about +/- 85 degrees. This allows for complete valve control, without the need to remove and reposition the users hand on the control knob 234. Ergonomics are improved. Using a potentiometer 244 having a 170 degree range of movement in one direction, plus 170 degrees in the other direction, and 2:1 tooth ratio between the shaft sprocket 296 and the idler 298, allows for use of the potentiometer over its entire range, for greater control sensitivity. As the valve shaft 232 is turned, either manually by gripping and turning the control knob 234, or automatically via the valve control motor 242 and electronic controller 248, the ports in the valve assembly 230 are opened and closed, to control movement of the piston 116 within the hydraulic cylinder 114.

For example, with the valve shaft 232 at a zero degree position, all ports are closed and no movement of the crane arm occurs. To begin to extend the crane arm 35, the valve shaft 232 is turned (clockwise in Fig. 30). This opens first and fourth valves, connecting the rear port 216 to the accumulator and simultaneously connects the front port 218 to the reservoir, through the valve assembly 230. Hydraulic fluid pressure on the back of the piston 116 exceeds the fluid pressure on the front surface of the piston, causing the piston 116 to move forwardly (to the right in Figs. 3, 27, and 30). The hydraulic cylinder cable 118 is driven counter-clockwise (in Fig. 30). The counter weight carrier 50, which is attached to the hydraulic cylinder cable 118, moves rearwardly upon the top surface of the first section 52.

Referring momentarily to Fig. 23, as the counter weight carrier 50 is driven rearwardly, the second section drive cable (or pair of cables) 140 drives the second section 54 forwardly. Referring momentarily to Fig. 24, this forward movement by the second section 54 simultaneously drives the third section 56 forwardly, via the forward movement of the third section drive pulley 150 and 151 (both attached to the second section 54) acting on the top and bottom extending cables 152 and 153. As a result, the third section 56 moves outwardly to the desired camera position. To reverse direction and retract the crane arm 35, the valve shaft is turned back (counter clockwise in Fig. 30) through the stop or closed position. This closes the first and fourth valves and then opens the second and third valves. Now, the hydraulic connections to the hydraulic cylinder are reversed, driving the piston in the hydraulic cylinder in the reverse direction and retracting the arm. The speed of extension and retraction will increase with increasing movement of the valve shaft away from the zero or closed position, due to the shape of the cams. Since the valve assembly 230 is pressure compensated, only small amounts of force are required to turn the valve shaft 232 and open and close the valves.

In use, the crane 30 is shipped to the filming location in the retracted position. The trim weights 48, the mobile counter weights 58, and any riser or extension 60 and camera head 62, are preferably separated from the camera crane 30 and transported individually to make transportation easier. At the filming location, the crane 30 is attached to a mobile base 32. The riser or extension 60 and the camera head 62 (if used) are attached to the nose plate 65. The camera and any accessories are attached to the camera platform. Mobile weights 58 are added to the weight carrier until the arm is balanced. The center of gravity CG of all of the moving elements is therefore then fixed, and remains on the pan axis P shown in Fig. 15, whether the arm is extended or retracted or in between.

Correspondingly, the center of gravity CG of the arm 35 also remains centered over the pan bearings 42 and 43. As a result, during panning movement, the weight load of the arm remains centered on the bearing. Deflection during panning of the center post 46, or of the frame or tires of the mobile support, is reduced or avoided entirely. This provides a more stable support for the camera. If needed, trim weights are added to precisely balance the crane arm 35. While the trim weights will typically be added at the back end of the arm, for some uses, they may also be attached near the front end of the arm.

The camera head 62, if used, is balanced using known techniques, conveniently by moving the camera head 64 into a 90 degree position, as shown in Fig. 6. The hydraulic system 100 is charged, preferably by plugging wall current into the connector or plug 237 within the electrical system of the hydraulic system 100. Alternatively, power from the battery 222, controlled by the switch 235, is used to power the motor 220 driving the pump 224. As the hydraulic system 100 operates with only small volumes of hydraulic fluid, the accumulator 228 can be quickly charged. The crane 30 is then ready for use in filming.

The camera 64 is brought to the desired position by pivoting the crane arm 35 about the pan axis P shown in Fig. 8, and by pivoting the crane arm 35 about the tilt axis T. These pivoting movements are typically performed manually. As the arm 35 is balanced, little or no lifting force is required, and manual or hand force is required only to overcome friction and inertia. Alternatively, as shown in Fig. 1, crane arm pan and/or tilt axis motors or actuators 74 and 76 can be provided on the mobile base or crane arm to perform these operations. The actuators 74 and 76, as well as the hydraulic control valve assembly 230, may optionally be remotely controlled, via a control box 275 connected to each of them via a wired or wireless connection. This allows the entire crane 30 to be remotely controlled. Pan and tilt sensors 75 and 77 (shown in Figs. 8 and 2) provide rate, direction, and/or position information to the control box 275.

The telescoping movement of the crane arm 35 is initiated by turning the control knob 234. This actuates the valve assembly 230, supplying hydraulic fluid to the hydraulic cylinder 114 to drive the piston 116, counter weight carrier 50, and in turn the second and third sections 54 and 56, as described above. The controller 248 can be set up or programmed to actuate the valve control motor to operate the valve assembly. This allows the crane arm 35 to automatically move to pre-selected positions, or to perform pre-programmed movements. (The remote control box 275 may be similarly programmed, with positions or movements (pan, tilt, telescope extend/retract) for the entire crane 30, and/or the camera head 62.)

As shown in Fig. 1, using the camera head 62 allows the center of gravity CG of the payload (typically the camera 64 and head 62) to be positioned on a horizontal, central axis CC (shown in Figs. 3-5) of the crane arm 35, as the sections or segments of the camera head 62 are adjustable. Positioning the center of gravity CG of the payload on the crane arm center line CC reduces or eliminates twisting or torsion of the crane arm 35 during rapid arm movements. Accordingly, the camera can be quickly moved from one position to another, without excessive generation of vibration or resonance in the arm 35. This provides a more stable camera support.

Referring to Figures 1 and 2, the counter weight carrier is movable along substantially the entire length of the first section 52. With the crane arm 35 in the retracted position, the counter weight carrier 50 is in front of the center post 36. As the range of movement of the counter weight carrier 50 is increased, in contrast to prior designs, fewer mobile counter weights 58 are needed for balancing. Accordingly, the weight of the entire crane 30 is reduced. This allows for easier transportation and setup.

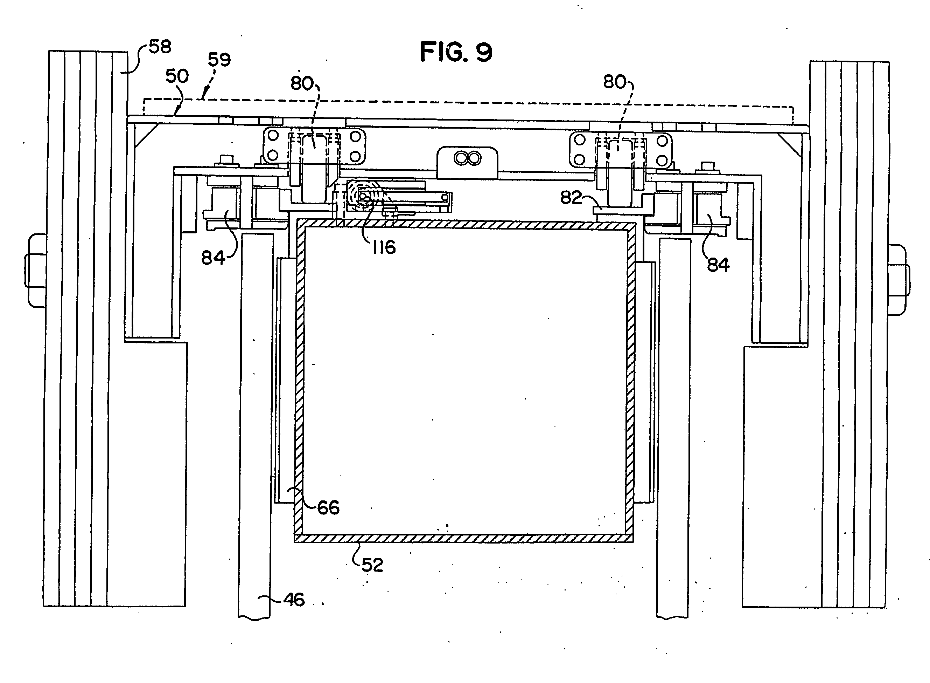

In addition, less force is needed to move the mobile counter weights, reducing the size and weight of the hydraulic system. The crane arm 35 is always maintained in balance, as the center of gravity CG of the arm is fixed. Even when the counter weight carrier 50 moves forward of the center post 46, the crane arm 35 remains balanced, with the CG forward of the tilt axle. Referring to Fig. 9, counterweights 59 may be provided on the top of the counterweight carrier 50, in addition to the sides of the counterweight carrier, to improve balancing characteristics under varying conditions.

The hydraulic system 100, including the hydraulic cylinder 114 and the valve assembly 230, also forms a separate inventive subsystem having other uses. This subsystem may be used in other equipment where an actuator applies force over a relatively long distance. In a basic form, the hydraulic system includes a piston slidable within a hydraulic cylinder. A first cable is attached to a first end of the piston, and a second cable is attached to a second or opposite end of the piston. The cables extend through the hydraulic cylinder and pass out of the hydraulic cylinder through cable seals. The cable seals allow the cables to slide into and out of the cylinder, while maintaining pressurized hydraulic fluid within the cylinder. The cable seals optionally may also provide a wiping action on the cables, so that the cable sections outside of the cylinder are substantially dry and free of hydraulic oil (even though the sections of the cables within the cylinder are immersed in or surrounded by hydraulic oil). However, the wiping action is not essential.

Since the piston can move through substantially the entire length of the cylinder (while pulling the first or second cable with it), a very long actuation length or stroke is provided, in a lightweight and compact design. The first and second cables can optionally be formed as single cable loop. To better provide a seal against the cables sliding through the cable seals 136, the cables 120, 122 may be formed with a smooth outer coating, sheath or jacket (of, e.g., plastic) surrounding a core of high strength fibers (of, e.g., steel, Nylon, etc.)

The valve assembly 230 also forms a separate inventive subsystem usable as well in other types of equipment and machinery, where precise hydraulic movements with no leakage are required, even at high pressures.

The crane arm 35 can be more safely used in wet areas and environments, because it can operate entirely on low voltage battery power, or can operate without any electrical power at all. While the hydraulic system advantageously includes a battery and motor, these are low voltage components (typically 12, 24, or 36 VDC). The hydraulic system can also be operated using the hand pump. The accumulator, once charged with hydraulic pressure, can also drive the crane arm 35 through several extension/retraction cycles, without any pumping or external power. The low voltage battery can be periodically recharged when the crane arm 35 is not in use. Alternatively, it can be quickly replaced with a fresh battery, while the crane arm is in use. This avoids the need for connecting 110 VAC or 220 VAC line current electrical cables to the crane arm (as is often required with existing crane arms).

As a result, safety relating to proper equipment grounding or shock hazards is reduced, since the crane arm 35 does not require line current or external grounding. Thus, in wet environments, the ability to operate only on battery power, or hand pump power, is a significant improvement. The need for inverters and transformers associated with use of 110 or 220 VAC power is also avoided. In addition, since external electrical power is not needed, the entire crane and mobile base can operate more freely, as the drag and wheel obstacles created by external electrical cables is avoided. Moreover, the 12, 24, or 36 VDC electrical system of the crane 35, if used, is compatible with the electrical power systems of most cameras and remote camera heads.

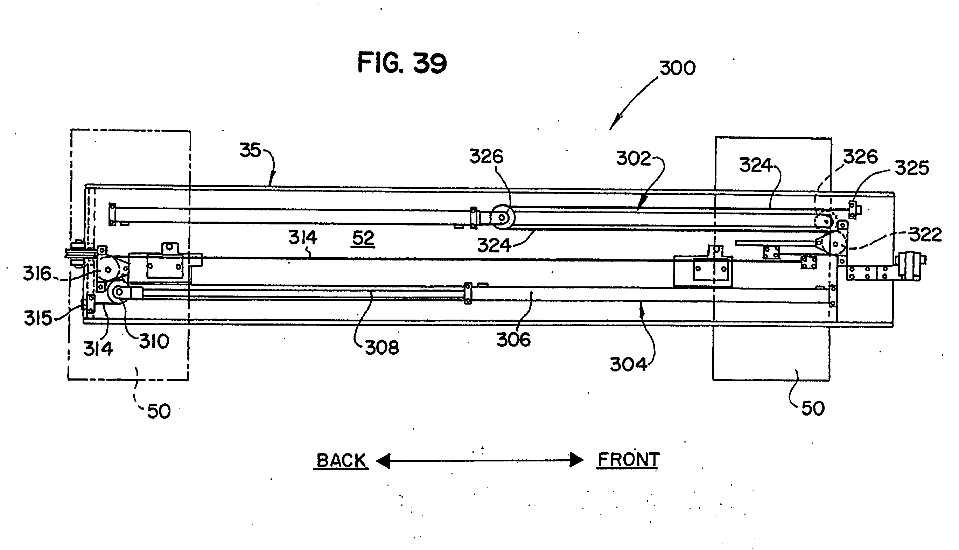

Fig. 39 shows an alternative crane arm extension/retraction drive system 300 which can be used instead of the drive system 100 shown primarily in Figs. 26-28. The drive system 300 has a first or retracting linear actuator 302 and a second or extending linear actuator 304. The actuators 302 and 304 may be hydraulic, electric, pneumatic, or use other drive means suitable for moving the counterweight carrier 50. Non-linear actuators for moving the counterweight carrier 50 may also be used, including rotary actuators or winches acting directly to pull on a cable attached to the counterweight carrier 50. In the embodiment shown in Fig. 39, the actuators 302 and 304 are linear hydraulic actuators. While other types of actuators may be used, hydraulic actuators may be advantageous because they are quiet, precisely and relatively easily controlled, compact, reliable, and can be remotely powered via a hydraulic system located away from the actuators themselves. Hydraulic systems are also waterproof.

Referring still to Fig. 39, where the actuators are hydraulic, each of the actuators 302 and 304 has a cylinder 306 attached or fixed in place on the first section 52, and a piston or ram 308 moveable into and out of the cylinder via hydraulic power. The cylinder 306 of the first actuator 302 is attached towards the back end of the first section 52. The cylinder 306 of the second actuator 304 is attached towards the front end of the first section 52.

The first actuator 302 acts as a retraction actuator as it pulls the counterweight carrier forward (to the position shown in solid lines in Fig. 39), which causes the arm to retract, as described above with operation of the drive system 100. The second actuator 304 acts as an extension actuator as it pulls the counterweight carrier 50 rearwardly towards the back of the first section 52 (to the position shown in dotted lines in Fig. 39), Which causes the arm to extend.

A retraction actuator pulley 326 is rotatably supported on a clevis at the end of the piston 308 of the first actuator 302. A retraction cable 324 has a first end 325 fixed or clamped near the front end of the first section 52. The retraction cable 324 runs or extends rearwardly from the first end 325, wraps around the pulley 326, runs forward and wraps around a forward idler pulley 322, then runs rearwardly and is attached to the counterweight carrier 50. The idler pulley 322 is rotatably attached to, and fixed in place on, the top surface of the first section 52, adjacent to the front end of the first section 52. As a result, when the actuator 302 retracts or pulls back, the counterweight carrier 50 is pulled forward to the position shown in solid lines in Fig. 39. This causes the arm 30 to pull back or retract, as described above relative to operation of the drive system 100.

Symmetrical with retraction components described just above, an extension actuator pulley 310 is rotatably supported on a clevis or other fitting at the end of the piston 308 of the second actuator 304. An extension cable 314 has a first end 315 fixed or clamped near the back end of the first section 52. The extension cable 314 runs or extends forwardly from the first end 315, wraps around the pulley 310, runs rearwardly and wraps around a rear idler pulley 316, then runs forwardly and is attached to the counterweight carrier 50. The idler pulley 316 is rotatably attached to, and fixed in place on, the top surface of the first section 52, adjacent to the back end of the first section 52. As a result, when the actuator 304 retracts (i.e., when the piston 308 is withdrawn into the cylinder 306), the counterweight carrier 50 is pulled rearwardly, towards the back of the first section 52, to the position shown in dotted lines in Fig. 39. This causes the arm 30 to extend, as described above relative to operation of the drive system 100. Chains and sprockets can alternatively be used in place of pulleys and cables. The term pulley as used here includes sprockets, and the term cable as used here includes chains. The term cable here includes flexible elements having a single or multiple strands, wires, or fibers.

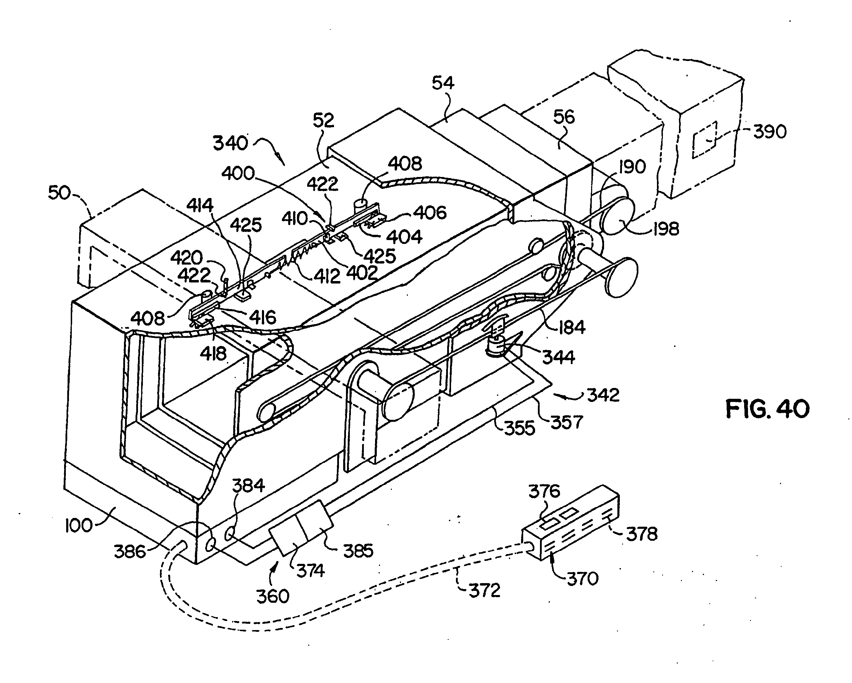

Fig. 40 shows an alternative embodiment 340 similar or the same as in the Figures described above, and optionally including one or both of a nose plate or camera platform angle stabilizing system 342, and a mechanical stopping position system 400. The cables 184 and 190, which mechanically level the nose plate 65 and camera head 62, are subject to slight stretching/contracting as the arm extends and retracts. This introduces backlash into the leveling system 1 04 and can cause the nose plate 65 to deviate slightly from level with telescoping movement of the arm. The term backlash here means the characteristics of the leveling system that cause the camera platform to deviate from level, when the arm extends or retracts. Stretching of the cables is the main source of backlash, with smaller amounts of backlash arising from strain of other components, and from other sources. The stabilizing system 342 reduces or prevents this deviation, and helps to maintain the nose plate, and thus the camera, in a level position, during telescoping arm movement.

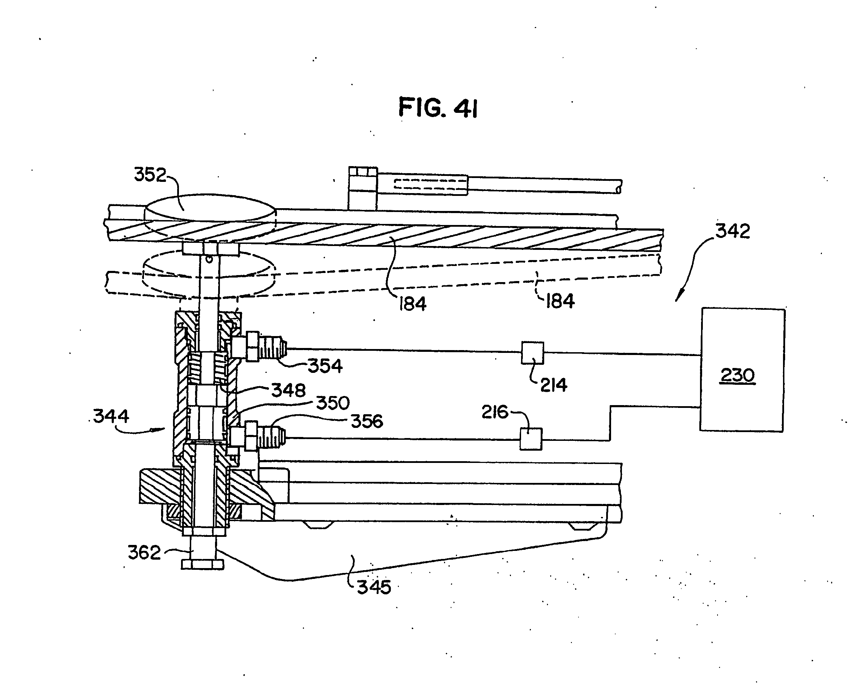

The stabilizing system 342 is generally symmetrical on both sides of the crane arm shown in Fig. 40. As shown in Figs. 40 and 41, the stabilizing system 342 includes a cable tensioning assembly 344 attached to each side of the arm on a mounting bracket 345. The cable tensioning assembly 344 on the right side of the arm (shown in Fig. 40) acts on the right side cable 184. The cable tensioning assembly 344 on the left side of the arm (not shown) acts on the left side cable 184. The cable tensioning assemblies or means 344 exert a downward force on the cables 184 when the arm extends. The cables are released when the arm retracts. The position of the cables 184 during extension is shown in dotted lines in Fig. 41. The position of the cables 184 during retraction is shown in solid lines in Fig. 41. The cable tensioning assembly can exert force on the cable s in various ways, including via mechanically or electrically driven motors or actuators.

Fig. 41 shows a hydraulically driven cable tensioning assembly 344, suitable for use with a hydraulically driven crane arm. As shown in Fig. 4-1, a hydraulic cable tensioning assembly 344 has a piston 348 moveable in a cylinder 350. A piston adjuster 362 may be provided to adjust the position of the piston. A cable plate 352 is attached to the piston 348 and is positioned on or around the cable 184. No spring 186 is used. In the stabilizing system 342 as shown in Fig. 41, the ports 354 and 356 are directly connected to the valve assembly 230 or to the hydraulic lines leading to ports 214 and 216. Consequently, the tensioning assembly 344 operates in parallel with and in proportion to hydraulic pressure supplied to the drive system 102 or 300.

In use, as the valve assembly 230 is actuated to extend the arm, fluid flows into the drive system 102 or 300, and also generally simultaneously to the cable tensioning assemblies 344. The piston 348 in each cable tensioning assembly 344 is forced down. This deflects the cable 184 from the position shown in solid lines, to the position shown in dotted lines, in Fig. 41. The amount of deflection needed to maintain the nose plate continuously level will vary depending on the payload, the elastic characteristics of the cables, and other factors. The amount of deflection can be adjusted as desired using the position adjuster 362. The movement profile and timing of the piston 348 can be selected via control of fluid flow to the cylinder 350.

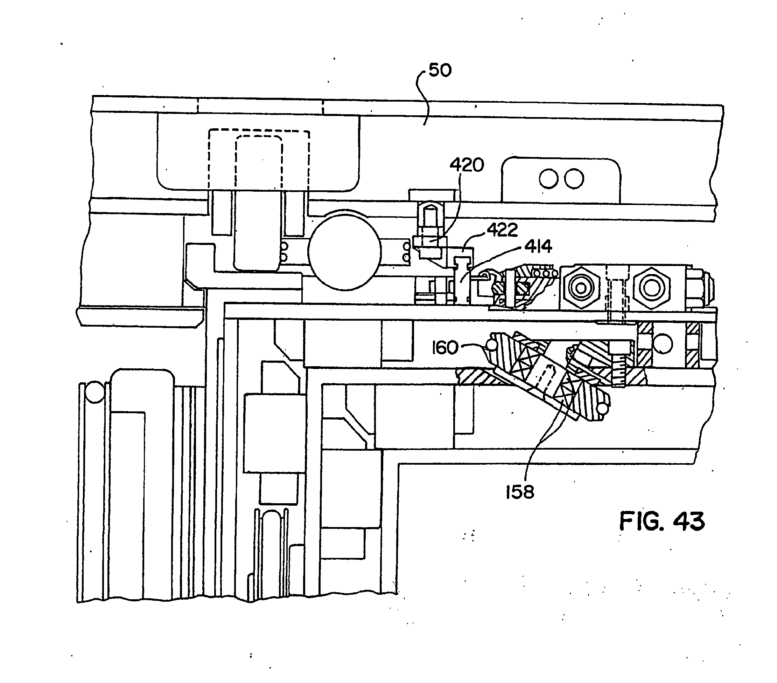

By deflecting the cables 184, the cable tensioning assemblies compensate for backlash in the leveling system caused by stretching of the cables when the arm extends. Accordingly, the nose plate 65 and any camera head 62 and camera 64 remain substantially level at all times. As shown in Fig. 43, to reduce backlash in the drive system, multiple cables 158 may be used, in place of the single cable 158 shown in Fig. 8.

The cable tensioning assemblies hold the cables 184 in the deflected position, until the arm is retracted. During retraction, the flow of hydraulic fluid to the cylinder 350 is reversed, moving the piston back up. The cables 184 return to the original position shown in solid lines in Fig. 41. Typically, the cable tensionings will deflect the cable from about 0.2 to 1.5 cm (0.1 to 0.6 inches, more typically about 0.2 to 0.4 inches). The stabilization system can also be equivalently designed to deflect the cables 184 up instead of down. If the flow of hydraulic fluid to the cylinder 350 in each cable tensioning assembly 344 is made proportional to the flow of hydraulic fluid to the cylinder 114, 302, or 304, then the action of the cable tensioning assemblies is automatically matched to the extension/retraction movement of the arm.

In an alternative system 360, shown in Fig. 40, a sensor or gyro 390 may optionally be provided on the nose plate 65, camera head 62, or the camera 64, with the sensor 390 linked to an electronic valve controller 374. The link may be wireless or via wires. The sensor 390 senses position relative to gravity and provides a position signal to the electronic valve controller 374. The electronic valve controller controls operation of a cable tensioning valve 385. The valve 385 is connected via hydraulic lines to hydraulic system ports 384 and 386, and to the cylinder 350 of each tensioning assembly 344. The ports 384 and 386 are connected directly to the accumulator 228, and to the return tank or reservoir 226. Consequently, the ports 384 and 386 are always supplied with hydraulic fluid pressure (so long as the accumulator is charged), regardless of the position of the valve assembly 230 (Figure 30).

The electronic valve controller controls the valve 385 to provide flow of hydraulic fluid to the cable tensioning assemblies 344, which deflect the cables 184 as needed, to maintain the nose plate 65, and hence the camera 64, in a level position. The sensor 390 and control loop to the electronic valve controller 374 may be especially useful when the crane is supported on a moving platform, such as a moving land vehicle, or watercraft. Where the platform or vehicle is constantly moving (e.g., the rocking movement of a floating vehicle or platform), the camera 64 may be constantly maintained in a level position, via constant active control of the nose plate position via the sensor 390 and electronic valve controller 374. With this automatic leveling system, the electronic valve controller 374 can continuously control operation of the cable tensioning assemblies 344, whether the arm is stationary or moving (i.e., extending or retracting). The system 360 operates to keep the camera level, regardless of operation of the drive system 102 or 300.

The stabilizing system 360 also operates independently of the stabilizing system 342. The stabilizing system 342 operates to compensate for backlash inherent in the crane arm components (primarily the stretching of cables). The system 342 generally will be included as part of the crane itself.

The stabilizing system 360 operates whenever the arm changes direction of movement, and provides a predetermined amount of cable deflection. The stabilizing system 360, on the other hand, generally may be included as part of the crane itself, or may be provided separately as an accessory or add-on package. The system 360 operates to compensate for external forces (such as buoyancy, inertia, acceleration, etc.) acting to move the camera platform out of level. When on, the system 360 operates continuously to keep the camera level, regardless of whether the arm is extending, retracting, or stopped.

For certain filming sequences, the camera 64 and camera head 62 (if used) may be submerged under water. When submerged, buoyancy forces will change the loads on the crane arm and on the leveling system 104. Use of the sensor 390 and electronic valve controller 374 system allows the leveling system 104 to keep the camera level, regardless of the buoyancy forces present during underwater filming.

As shown in Figs 30 and 40, in addition to, or as an alternative to, controlling telescoping movement of the crane arm via the control knob 234, a remote control unit 370 may also be provided. The remote control unit 370 is linked to the electronic valve controller 248 via a wired or wireless link 372. A hand control 376, such as a rocker switch, joystick, etc. is used to control the direction and speed of telescoping arm movement. Stop positions may also be selected by adjusting electronic stop positioners 378 on or in the unit 370. Using an arm position signal from the potentiometer 244 and the stop position values selected via stop positioners 378 on the remote control 370, the valve controller 248 actuates the valve 230 so that the arm stops at the selected positions. Accordingly, the limits of telescoping arm movement can be set electronically using the unit 370 and electronic valve controller 374, or by using the mechanical stop position system 400 described below. Of course, stop positions may also be set electronically via the electronic valve controller directly, with or without use of the remote control unit 370.

A mechanical stop position system may be used to temporarily select extended and retracted limits of travel which are less than the total available range inherent in the crane arm. Setting such temporary front and back stop positions may be useful in filming sequences requiring the camera to located at a precise position, moved away, and then returned back to the that position. The mechanical stop position system uses movement of a component of the arm to control the arm drive system, so that telescoping movement of the arm stops at a desired position. The specific drive system (hydraulic, electric, pneumatic, etc.), and the specific moving component of the arm used, may vary with design parameters.

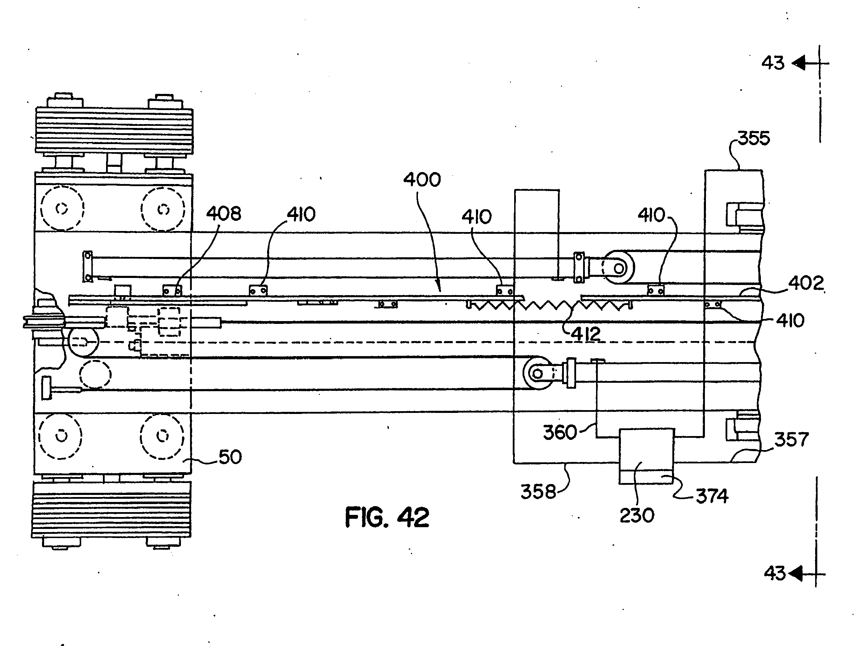

Figs. 40 and 42 show a mechanical stop system 400 that works with a hydraulic drive system, such as system 102 or 300. The counterweight carrier 50 is selected as the moving arm component which operates the stop system 400. As shown in Fig. 40, the stop system 400 has a front bar or rail 402 supported by supports 410 on the top surface of the first or outer section 52. A cam or angle surface 404 adjacent to the front end of the front bar 402 faces a hydraulic stop valve 406. The front bar 402 is moveable in a front/back direction, over a distance sufficient for the cam 404 to operate the stop valve 406. Back up rollers 408 support the back surface of the bars 402 and 414.

Referring still to Figs. 40 and 42, a rear bar 414 similarly has a rear cam 416 for operating a rear hydraulic stop valve 418. A tension spring 412 connects the front and rear bars. Referring now to Figs. 40 and 43, a carrier pin 420 extends down from the bottom surface of the counterweight carrier 50. As the carrier 50 moves towards the back of the arm (as the arm telescopically extends outwardly), the carrier pin 420 contacts a pin stop 422 attached on the rear bar 414, moving the rear bar 414 to the rear, against the force of the spring 412. As this occurs, the rear cam 416 moves into engagement with a pin or other component of the rear stop valve 418, gradually closing the valve 418 and stopping telescoping arm movement.

The shape of the cam or angle surface 416 is advantageously selected to provide a gradual or feathered stopping movement. This avoids abrupt stopping movements. The pin stop 422 can be secured at any position along the rear bar 414 (e.g., with a thumbscrew, wing nut, etc.) to select the front or extended position stopping position of the arm. Front and rear bar stops 425 limit the rearward and forward movement of the front and rear bars 402 and 414, respectively. The bar stops 425 are positioned to limit bar travel to about 2-10 cm (1-4 or 2-3 inches), a dimension comparable to or slightly longer than the length of the cam or angle surface 404 or 416.

When the arm is retracted, the carrier pin 420 moves forward with the carrier 50. The spring 412 pulls the rear bar forward, disengaging the cam 416 from the stop valve 418, and returning the rear bar 414 to its original position. As the arm continues to retract, a similar stopping operation is performed via the pin 420 acting on the pin stop 422 on the front bar 402.

As shown in Fig. 30, the mechanical stop system 400 operates independently of the electronic valve controller 248 and the valve 230. Consequently, in the event of failure of the electronic valve controller 248, or electrical power failure, the mechanical stop system is unaffected and continues to operate. Some filming sequences may require rapid camera movement to a position close to an actor, or close to moving or dangerous props or equipment. To even more reliably stop the crane arm at a desired position, a stop position can be set via both the electronic stop positioner 378, and the mechanical stop system 400.

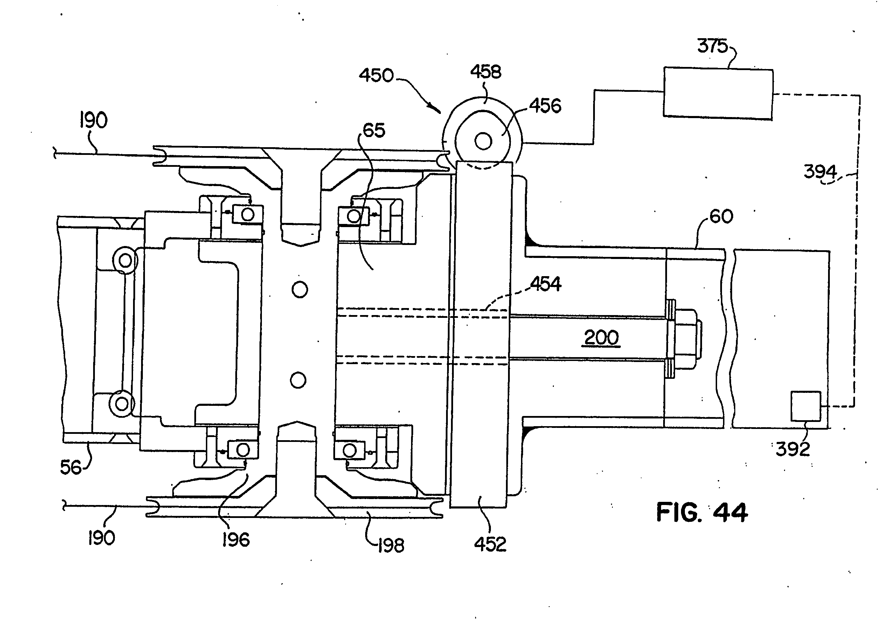

An optional roll or dutch angle control system 450 is shown in Fig. 44. The extension or riser 60, for example as shown in Fig. 20, is modified to attach to a gear sector plate 452. The plate 452 is pivotably supported on a bearing 454 on the nose plate 65. A worm gear 456 meshes with a gear sector on the plate 452. The gear is driven by a motor 458. A sensor 392 detects the position of the extension or riser 60, and provides a signal to a motor controller 375 (Fig. 44), via a wired or wireless link 394. The motor controller 375 may be included with or part of the electronic valve controller 374 (which will typically be located within the housing or enclosure for the hydraulic system 100, at the back end of the arm). Alternatively, the motor controller 375 may be separately provided (along with the sensor 392 and motor 458) and attached elsewhere on the arm. The motor controller 375 controls the motor 458 to pivot the gear sector plate 452, and hence the extension or riser, and the camera, to maintain a level or zero roll angle. Similar controls may be used to maintain a constant pan angle as well.

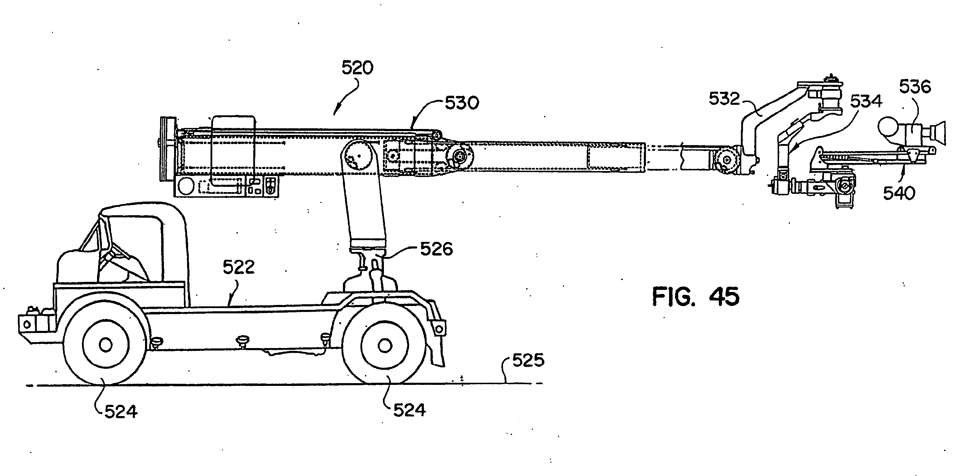

As shown in Fig. 45, a camera crane 520, which may be the same as or different than the crane 30 described above, has an arm 530 mounted on a mobile vehicle or platform 522, which rolls on wheels 524. The arm 530 is pivotably mounted on a post 526, to allow the arm 530 to move in a panning (azimuth) direction. For typical filming sequences, a nose 532 and a remote movement head 534 may be provided on the arm 530. Referring to Figs. 45-47, the present shock and vibration isolator or support 540, in the example shown, is supported on an optional leveling head 538 attached to the remote movement head 534.

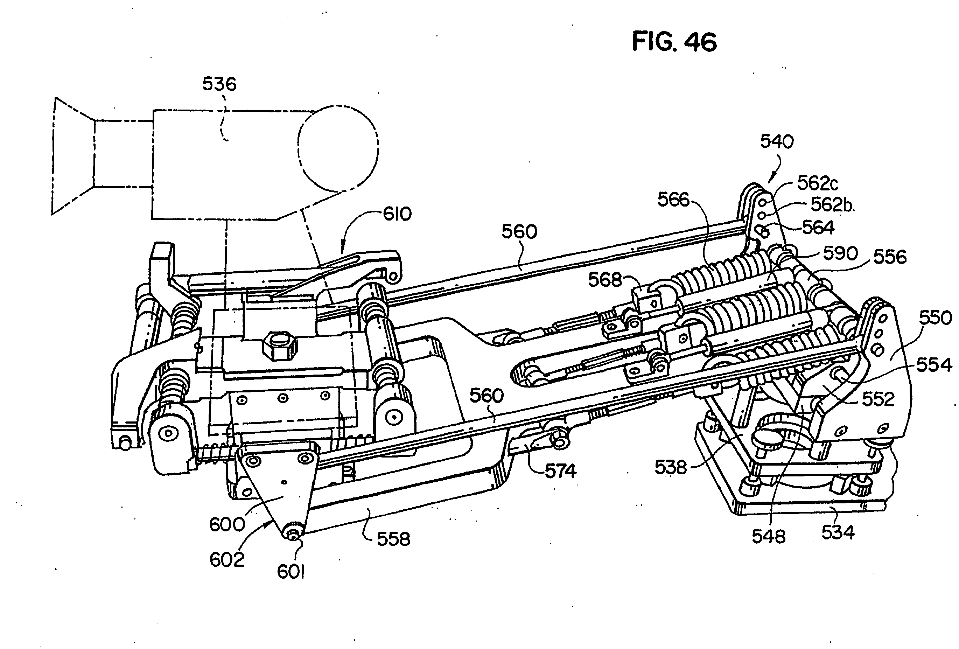

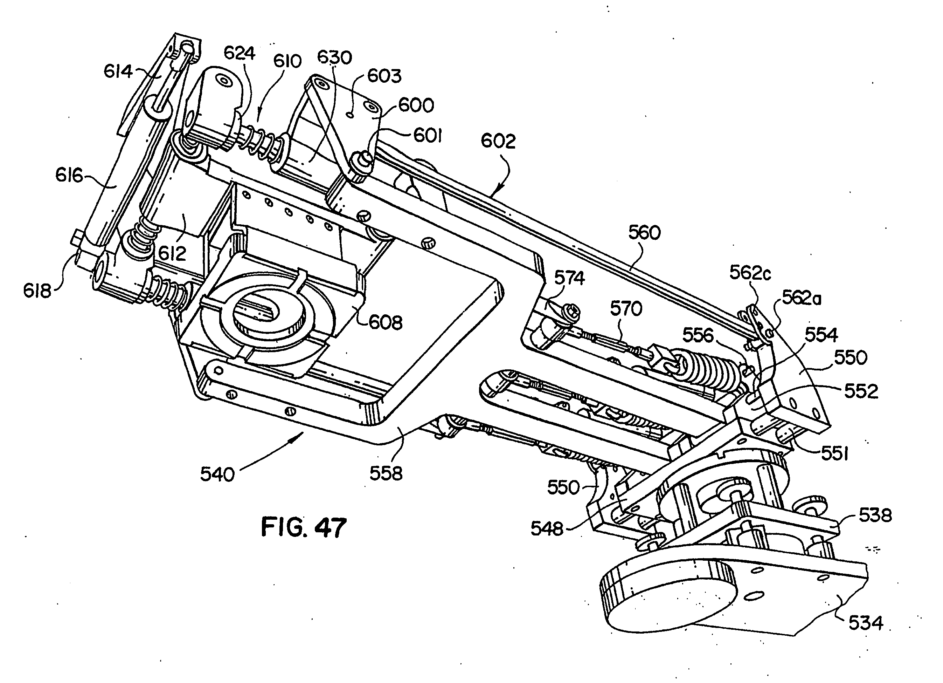

The camera 536 is attached to the front end of the isolator 540, as shown in Figs. 45 and 46. The arm 530, shown in Fig. 45, may be a fixed length arm (assembled from separate segments), or it may be a telescoping arm, as described above. The remote head 534, if used, may be a two or three-axis head. Of course, Fig. 45 shows but a single example of use of the isolator 540 on a crane. The isolator 540 may also be used on camera dollies or other mobile platforms or vehicles with, or without, use of a post 526, arm 530, nose 532, or remote head 534. As shown in Fig. 47, a drop down attachment may be attached to the bottom surface of the mounting plate 612, to mount the camera in an underhand position below the isolator plate 558.

Turning now to Figs. 46, 47, and 48, the isolator 540 has left and right, or first and second, side plates 550 attached to a base 548 by side plate posts 551. The base 548 collectively includes the components of the isolator 540 that are rigidly attached to and move with the crane or dolly arm, or other supporting structure. First and second, or left and right, axle plates 552 are attached to the base 548, between the side plates 550. An isolator arm 558 is pivotably attached to plate 548 via an axle 554 extending through the axle plates 552 and holes in the back end of the isolator arm 558. The isolator arm 558 can therefore pivot vertically, or up and down, about the axle 554. A spring bar 556 extends through and is supported by the axle plates 552.

Referring to Figs. 46 and 47, first and second, or left and right, leveling plates 600 are pivotably attached to the front end of the isolator arm 558. A leveling rod 560 is pivotably attached to each leveling plate 600, at the front end of the isolator 540, and is also pivotably attached to a side plate 550, at the back end of the isolator 540. As is best shown in Fig. 46, three (or more) holes or openings 562a, 562b and 562c are provided at the top of each side plate 550. The back end of the leveling rod 560 is attached to the side plate 550 at one of the holes 562a-c, using a quick release pin 564. The holes 562a, 562b, and 562c are located on a diameter centered at the pivot joint 603 where the front end of the leveling rods pivotably attach to the leveling plates. These holes are at a position slightly forward of the axle 554. The leveling rods 560 attach to the upper pivot joint 603 on the leveling plates at a location also slightly forward of the lower pivot joint 601, where the isolator plate is attached to the leveling plates 600.

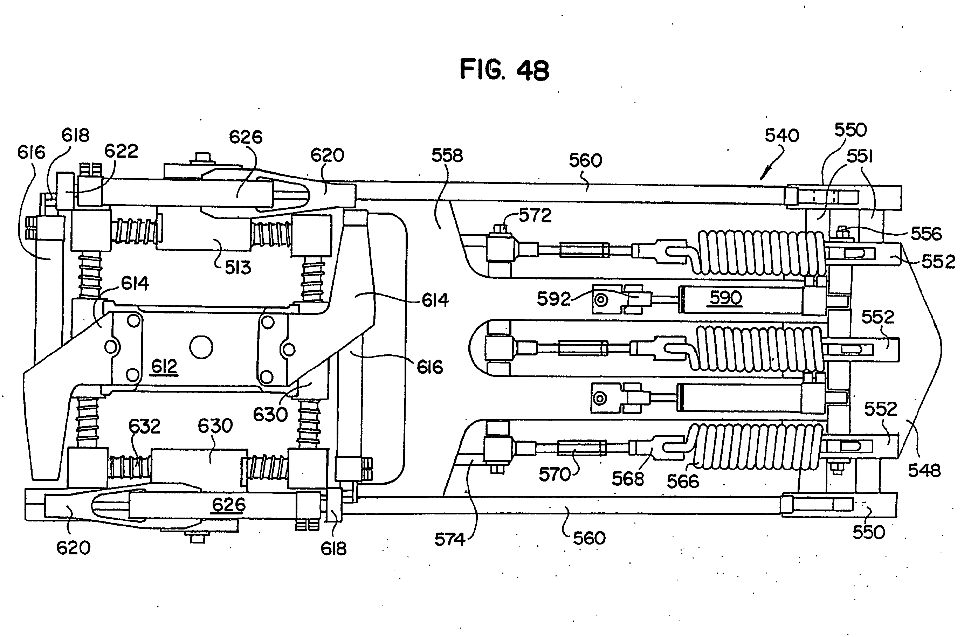

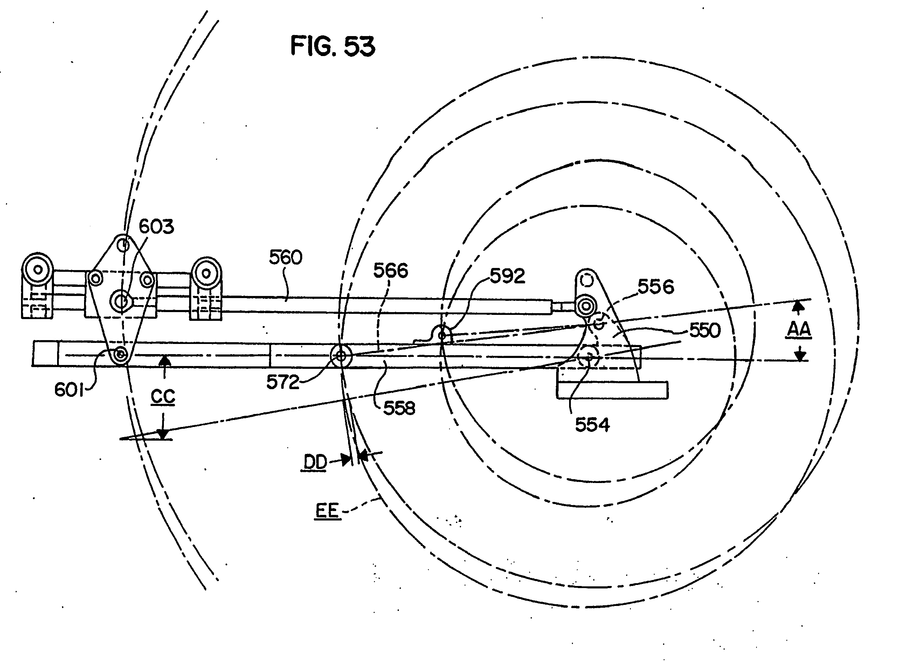

As shown in Figs. 46 and 48, springs 566 are provided to exert a tension spring force on the isolator arm 558. Each spring 566 extends from the spring bar 556, which is rigidly connected to the base or base plate 548, to a turnbuckle 570 attached to a spring axle 572 on the isolator arm 58. A spring cap 568 is used to connect the front end of the spring 566 to the back end of the turnbuckle 570, as shown in Figs. 46 and 48. Referring momentarily to Fig. 53, the spring bar 556 is vertically above the plate axle 554 and the spring axle 572, as shown in Fig. 48. Accordingly, the tension force exerted by the springs 566 acts at an angle AA to the plane of the isolator arm 558. The angle AA preferably ranges from 2-20, 5-15, or 8-12 degrees. This allows for relatively large amounts of pivoting movement of the isolator arm 558, with relatively little deflection of the springs 566, resulting in an elastic or soft feel or movement of the isolator arm 558.

On the other hand, since the angle AA is small, the vertical component of force exerted by the springs 566 is also small. In the design shown, three springs are used to achieve sufficient vertical force on the isolator arm 558. As one example, to support a camera payload of about 45 kg (100 pounds), three springs 566 are used, with each spring having a spring constant of about 110 kg/cm (600 pounds/inch). The number and type of spring or springs selected will vary with the intended payload and other parameters.

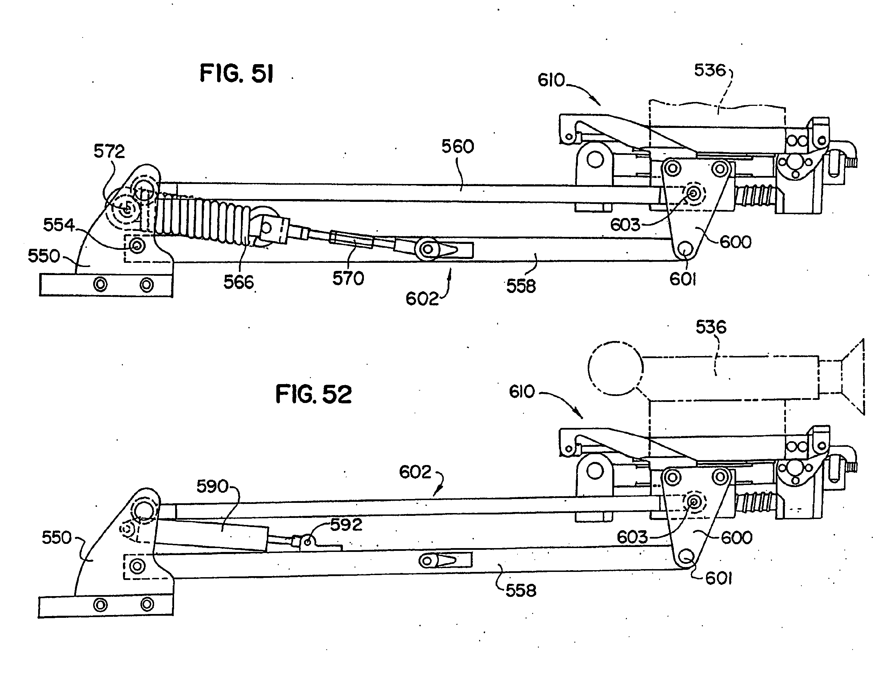

Spring axle end supports 574 may be provided, as shown in Figs. 47 and 48, to better support the spring axles 574. Referring still to Figs. 46 and 48, the back end, or cylinder of a dampening element is attached to the spring bar 554. The piston or front end of the dampening element 590 is attached to a clevis 592, as shown in Fig. 52, on the isolator arm 558. Referring to Figs. 52 and 53, the dampener 590 exerts a dampening force on the isolator arm 558, along an axis or line slightly offset from the spring force direction. The dampeners 590 are preferably viscous or fluid dampeners, with adjustable dampening characteristics. While two dampeners 590 are shown, one or more may be used, and different types of dampening elements may be used. In an alternative design, compression springs can optionally be used instead of, or in addition to, the tension springs 566, with the compression springs attached to a spring bar mounted below the axle 552.

Referring to Figs. 46-48, a horizontal or X-Y isolator subassembly or subsystem 610 is supported at the front end of the isolator arm 558. The horizontal isolator assembly 610 includes dampening elements. Referring to Fig. 48, lateral shock or dampening arms 614 are attached to the mounting plate 612. A lateral shock absorber or dampener 616 is connected between each arm 614 and a fixed connection point 618, located at diagonally opposite corners of the assembly 610.

Referring still to Fig. 48, a ferrule or guide bar housing 630 is attached to each leveling plate 600. The ferrule 630 is slidably positioned around the longitudinal guide bars 632. Longitudinal dampener or shock absorber arms 120 are attached to the left and right side ferrules 630 or leveling plate 600, and to fixed connection points 622, located at diagonally opposite corners of the assembly 610. End cushions 624 are also provided adjacent to the ends of the longitudinal guide bars 632 and to the lateral guide bars 634. Centering compression springs 636 act to maintain the mounting plate 612 in a central position.

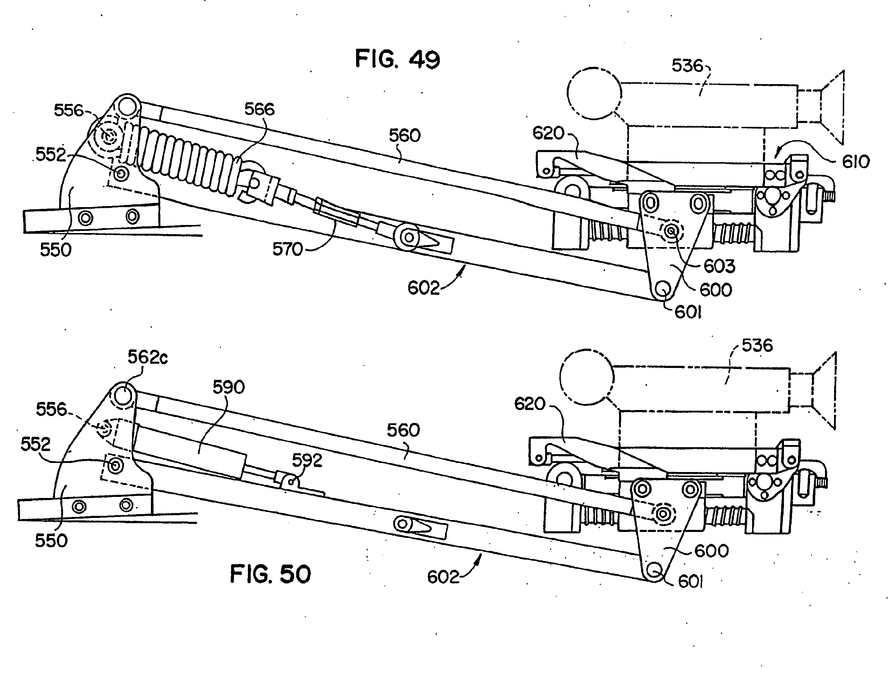

Referring to Figs. 51-53, a parallelogram linkage 602 is formed by the leveling rod 560, isolator arm 558, leveling plate 600, and the base (which here includes the side plates 550, axle plates 552, axle 554, and the quick release pins 564). As shown by comparing the isolator 540 of Figs. 49 and 50, with the isolators 540 of Figs. 51 and 52, as the parallelogram linkage 602 pivots up or down about the base, the leveling plates 600 remain at the same level orientation. Since the ferrules 630 on the leveling plates 600 support the horizontal isolator assembly 610, the horizontal isolator assembly 610 also remains level as the isolator 540 pivots up or down.

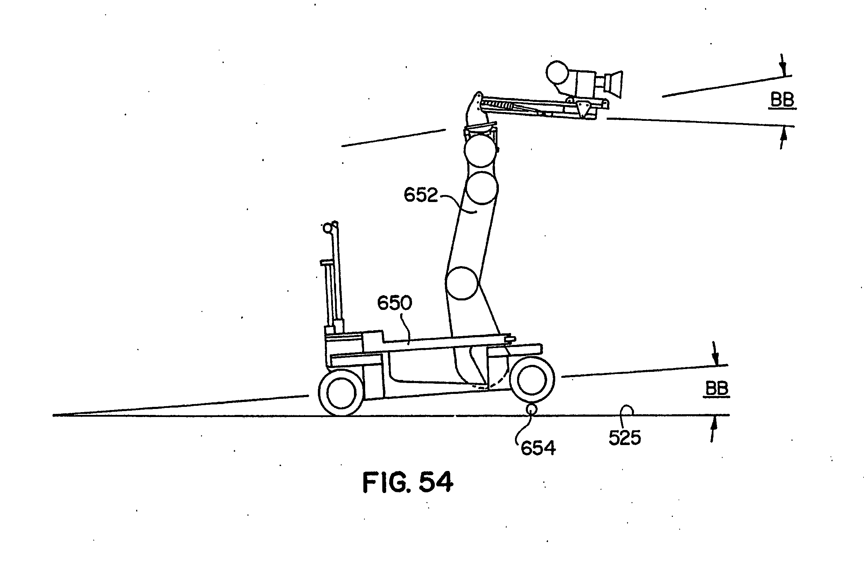

In use, the isolator 540 is attached to a remote head 534, or to another crane or dolly accessory, such as a leveling head 538, riser, drop down, swing head, etc. Alternatively, the isolator 540 can be attached directly to a crane or dolly arm, such as the crane arm 530 shown in Fig. 45, or the dolly arm 652 on the dolly 650, shown in Fig. 54. The weight of the camera 536 can vary widely. For example, a compact digital camera and camera accessories may weigh as little as 9-14 kg (20 or 30 Ibs), while a conventional motion picture film camera, along with its lens and film magazine, batteries, etc., may weigh 60 kg (130 pounds) or more. The isolator 540 is therefore advantageously made so that it can be adjusted depending upon the weight of the camera 536.

Referring to Figs. 49 and 50, while the springs 566 typically have an initial tension of 70-250 kg (e.g., 150-550, 250-450, or 300-400 pounds), when the camera 536 is initially placed on the mounting plate 612 of the isolator 540, the isolator 540 deflects downwardly, as shown in Figs. 49 and 50. The turnbuckles 570 are then tightened, which stretches the spring 566 attached to the turnbuckle 570, increasing the spring force, including the vertical component of the spring force acting on the isolator arm 558. As the turnbuckles 570 are tightened, the isolator arm 558 pivots upwardly from the downwardly inclined position shown in Figs. 49 and 50, to the level or horizontal position shown in Figs. 51 and 52. The turnbuckles 570 may be turned using a wrench. Alternatively, they may be provided with hand levers, or similar devices, which allow tightening, or loosening, by hand, so that no tools are required during set up.

The dampeners 590 are adjusted to provide a desired dampening characteristic for movement of the isolator arm 558. As the crane 520, shown in Fig. 45, or the dolly 650, as shown in Fig. 54, rolls over the ground or floor 525, the crane vehicle 522 and arm 530 (or the dolly 650 and dolly arm 652) necessarily move up and/or down vertically, as the wheels roll over irregularities or uneven ground. While the shock and vibration impulses created by rolling over irregularities move through the supporting structure (522 and 530, or 650 and 652) to the base 548, the mounting plate 612 and camera 536 remain largely steady and unaffected. Due to inertia, the camera 536 remains substantially in a fixed position, with the isolator arm 558 pivoting up and down, as driven by the supporting structure 530 or 652.

As the spring force is primarily horizontal, and with only a small vertical component, the isolator arm 558 can achieve a range of travel of approximately plus or minus 10-40 cm (4-10, 5-9, or 6-8 inches) (for a total vertical range of travel of 30-40 cm (12-16 inches), while stretching the springs 566 by only a small amount. For example, as shown in Fig. 53, with the isolator arm 558 moving down vertically by about 12 cm (4.7 inches) (as measured by the pin or bolt 601 attaching the leveling plate 600 to the front end of the isolator arm 558), the springs 566 stretch by a distance DD of about 7-8 cm (0.3 inches). As the isolator arm 558 moves down, the spring axles 572 move along diameter EE centered at the axle 554. As the springs 566 are attached to the spring bar 556, offset vertically above, and slightly behind the axle 554, downward movement of the isolator arm 558 causes the springs 566 to stretch. Conversely, upward movement of the isolator arm 558 allows the springs to contract.

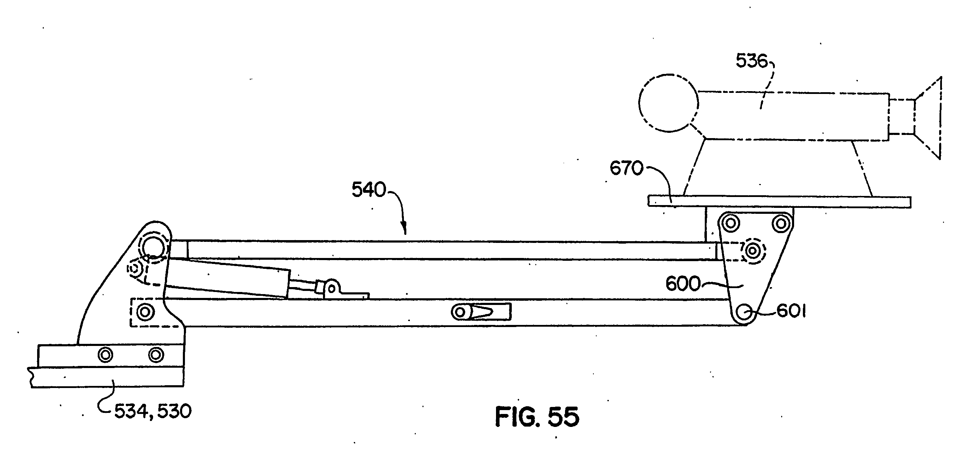

As shown in Fig. 55, the isolator 540 may be used without the horizontal isolator assembly. In this use, a camera mounting plate 670 is directly and rigidly attached to the leveling plates 600, and the camera is mounted on the mounting plate 670. This provides for vertical isolation of the camera.

The horizontal isolator assembly 610, if used, isolates the camera 536 mounted on the mounting plate 612 from longitudinal and lateral shock and vibration impulses. In addition, the dampening elements 616 and 626 dampen lateral and longitudinal movement. The dampening elements are arranged in pairs, with each pair acting together, to avoid torquing the mounting plate 612, as the springs act to return the mounting plate to the center position, after a deflection caused by a shock impulse from the base.

The lateral guide bars 634 preferably have a radius of curvature. For use with larger dollies or cranes, the radius of curvature of the lateral guide bars 634 is larger. Accordingly, for use on a small camera dolly, as shown in Fig. 54, the radius of curvature of the lateral guide bars 634 may be, e.g., 90-370 cm (36-144 inches). For use on a larger vehicle, such as the crane shown in Fig. 45, where the camera 536 is ordinarily'at a higher elevation above the ground, the radius of curvature of the lateral guide bars 632 will be greater (meaning that the bars will have less curvature), for example, in the range of 150-425 cm (60-168 inches).

Referring to Figs. 46 and 54, the adjustment positions 562a, 562b and 562c of the leveling rods 560 can be used to change the characteristics of the parallelogram linkage 602, to compensate for elevation angulation. As shown in Fig. 54, when the front wheel of a mobile vehicle, such as a camera dolly 650, rolls over a bump, crack, cable, or other irregularity 654, the front end of the dolly 650 necessarily rises up, as the wheel rolls over the irregularity. Consequently, the entire dolly 650, arm 652, and base 548 of the isolator 540 are also moved into an incline position, at an angle BB, as shown in Fig. 54. The angle BB in Fig. 54 is exaggerated for purpose of illustration. In actual use, the inclination angle BB would be much smaller and less noticeable.

Since the parallelogram linkage 602 ordinarily maintains the mounting plate 612 level with the base 548, the mounting plate and camera 538 are ordinarily inclined upwardly at angle BB, due to the angulation caused by the irregularity 654 on the floor 525. As a result, the elevation angle of the camera lens is higher than intended, and higher than when the dolly 550 is level. While the angulation may be acceptable in some filming sequences, in others, especially where telephoto lenses are used to film subjects at a great distance, this angulation may be disadvantageous or unacceptable. The alternate connection locations 562a, 562b, and 562c for the leveling rods 560 allow the isolator 540 to compensate for elevation angulation.

As shown in Figs. 49 and 50, with the leveling rods 560 connected to the side plates 550 at the center or bottom locations 562a or 562b, the leveling rod 560 is no longer precisely parallel to the isolator plate 558. Consequently, as the now slightly non-parallel linkage 602 pivots down and up, the camera mounting plate will pivot clockwise and counterclockwise, respectively, by a proportional amount. With this setup, the camera mounting plate is level with the base only when the linkage 602 is horizontal. When the dolly 650 rolls over an irregularity, creating elevation angulation, the downward pivoting movement of the isolator arm 558 results in the parallelogram linkage 602 pivoting the mounting plate 612 and the camera 536 slightly downwardly, or clockwise in Figs. 49 and 50. The lens of the camera 536, accordingly, remains generally aimed at the subject. Without the compensation provided by the angulation adjusting features 562c, the lens would be aimed too high.

After the dolly 650 rolls over the irregularity and returns to a level position, the base also returns to a level position, as shown in Figs. 51 and 52, along with the isolator arm 558. The linkage 602 similarly returns to its centered or neutral position, wherein the mounting plate 612 and camera 536 are level. The reverse angulation compensating effect occurs when the front wheels of the dolly 650 roll into a recess or depression, or the rear wheels encounter a bump, and the isolator arm 558 moves into an upwardly angled position. With the isolator arm 558 angled upwardly, the linkage 602, when set up as shown in Figs. 49 and 50, tilts the mounting plate 612 and the camera 536 slightly upwardly, or counter-clockwise, as shown in Figs. 49 and 50, to better maintain aim of the lens. As is apparent from Fig. 54, the shorter the wheel base of the crane or dolly, the more elevation angle will occur as the dolly rolls over an irregularity. The angulation compensation feature of the linkage 602 is therefore especially useful with small camera dollies.

While the parallelogram adjustment or compensation features are shown as the holes 562a, 562b, and 562c having different vertical positions on the side plates 550, the same compensating effect can be achieved by similar holes on the leveling plates 600, or by changing the pivot joint locations of the isolator plate 558 to create a non-parallel or near-parallel linkage. In the specific design shown, where the spacing between the axle 554 and the leveling plate lower pivot joint 601 is about 66 cm (26 inches), the holes 562a, 562b, and 562c are preferably spaced vertically apart by .75-2 cm (0.3-0.7 or 0.8, 0.4-0.6, or about 0.5 inches). Alternatively, the elements forming the longer sides of the near parallelogram, here the leveling rods and the isolator plate 558, are offset so that they form an angle of 2-7, 3-6, or about 4 or 5 degrees with each other.

In general, the selection of the top, center, or lower holes 562c, 562b, or 562a will be determined on whether elevation angulation is desired. If no elevation angulation compensation is wanted, the top hole 562c is used, as this provides a pure parallelogram linkage. If elevation angulation compensation is desired, the second or center hole 562b is preferably used when the mobile vehicle has a larger wheel base (typically about 150 or 200 cm or greater). The bottom hole 562a is preferably used when the vehicle has a shorter wheel base, to provide increased compensation for the increased angulation occurring with vehicles or dollies having a shorter wheel base (typically about 80 to 120 or 150 cm, or less).

Of course, additional holes, or overlapping notches, may also be provided, to provide various degrees of angulation compensation. While the use of quick release pins and the holes 562a-c are shown, other equivalent techniques or means for changing the positions of the leveling rods may also be used, including clamping fittings, cams, screw threads, latches, etc. The leveling rods may also include means for varying their lengths, such as screw threads, turnbuckles, telescoping arrangements, etc., to vary the initial camera position set-up, as well as the compensation characteristics of the isolator.

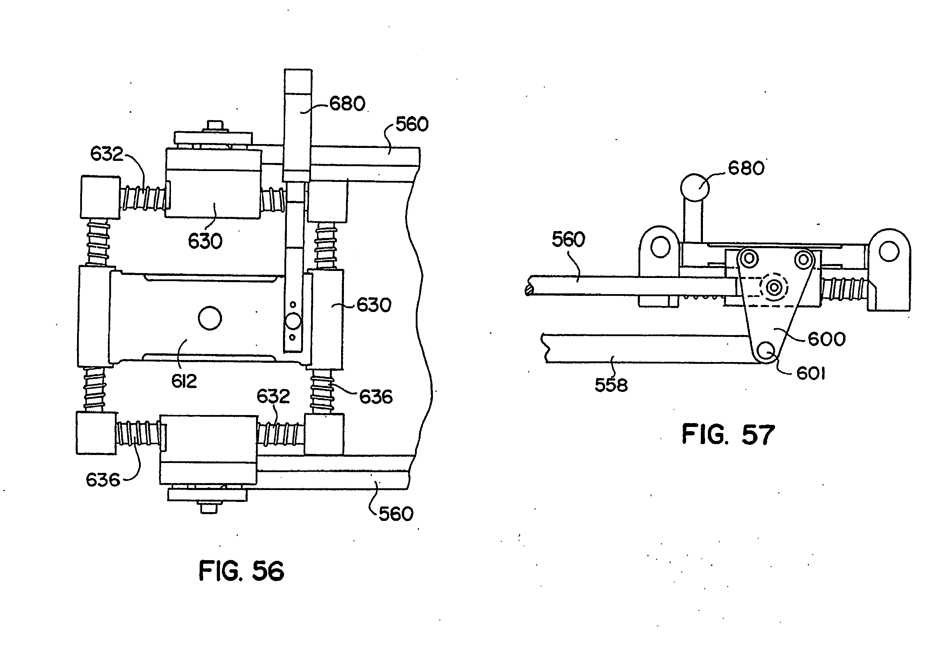

Turning to Figs. 56 and 57, in an alternate design of the horizontal isolator assembly, the pairs of dampening elements 616 and 626 are removed. No dampening elements are used. A handle 680 attached to the mounting plate 612 extends out to one side. The springs 636 are provided with a spring constant which is just sufficient to overcome friction and to slowly return the mounting plate to the center position. Dampening, if desired, is provided manually, by holding the handle 680, and optionally pushing or pulling the mounting plate back to the center position, after a deflection away from the center position.

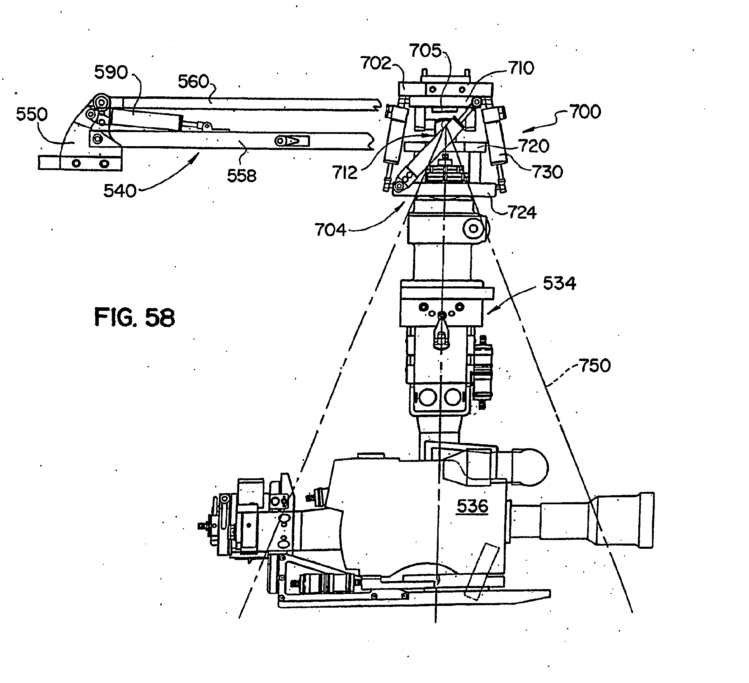

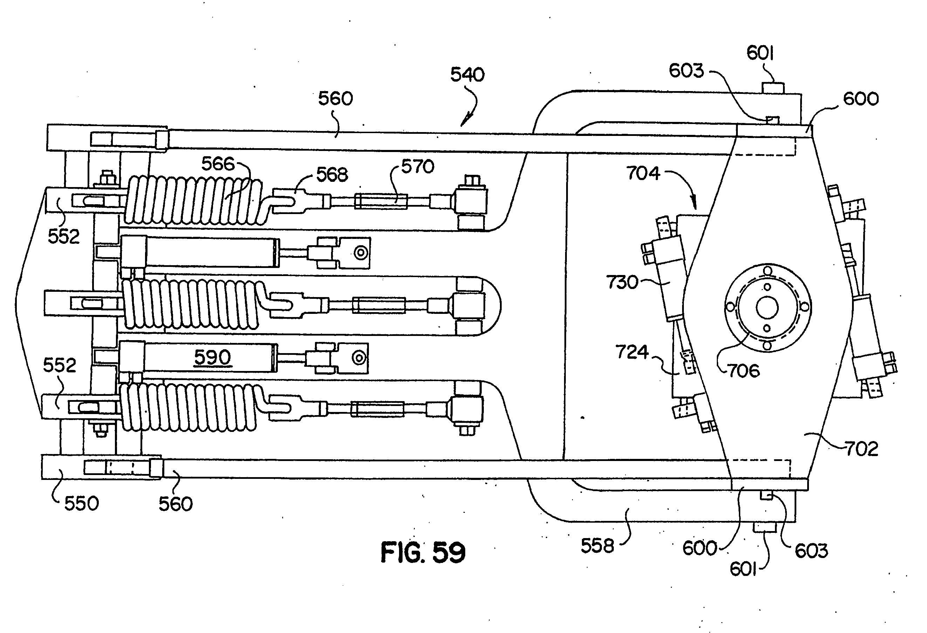

Turning to Figs. 58, 59, and 62, in an alternate embodiment 700, the horizontal isolator 610 (shown in Figs. 46-52 and 56) is replaced with an overhead isolator or assembly 704. As shown in Fig. 59, a head plate 702 is pivotably attached to the arm 558, in place of the isolator 610. The vertical axis isolator 540 shown in Figs. 58, 59, and 62 is the same as in Figs. 46-55, except that the horizontal axis isolator 610 is replaced with the head plate 702. Consequently, the head plate 702 is isolated from vertical shock impulses, and is maintained level, via operation of the isolator 540, as described above.

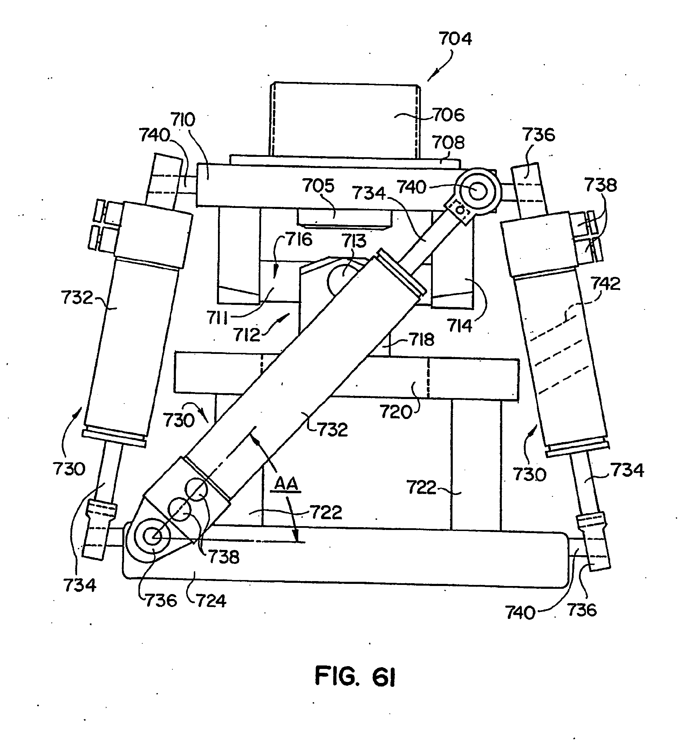

The overhead assembly 704 is attached to the head plate 702 by a mounting hub 706 threaded into a central opening in the plate 702. A hub bolt 705 extends through a top plate 710 of the assembly 704 and is threaded into an opening in the mounting hub 706, as shown in Fig. 61. A bearing disk or washer 708 is positioned between the bottom surface of the mounting hub 706 and the top plate 710.

As shown in Fig. 61, upper posts 714 extend down from the top plate 710 to a first axle 711 of a pivot or U-joint 712. Lower posts 718 extend up from a center plate 720 to a second axle 713 of the pivot joint 712. The ends of the axles 711 and 713 are supported or secured in bearing surfaces on the posts 714 and 718. As a result, the center plate 720 can pivot continuously in two axes (a first axis co-linear with the first axle 711 and a second axis co-linear with the second axle 713). A lower plate 724 is attached to standoffs 722 extending down from the center plate 720.

The pivot joint 712 need not necessarily include a u-joint. A ball joint, or other joint allowing pivoting movement in two axes may be used. Indeed, the pivot joint may be virtually any joint or attachment which can hold or support the weight of the center and lower plates 720 and 724, and the payload, while allowing them to pivot or swing relative to the upper plate 710. These other joints may include, for example, a simple chain, cable, or mechanical linkage. In addition, two (or more) separate or combined single axis pivot joints or devices may be used. While the plates 710 and 724 are shown as square, and the plate 720 is shown as round, other shapes (round, polygon, etc.) may be used. The plates may be formed as hollow or open frame structures, with the term plate including such structures, and other supporting structures.

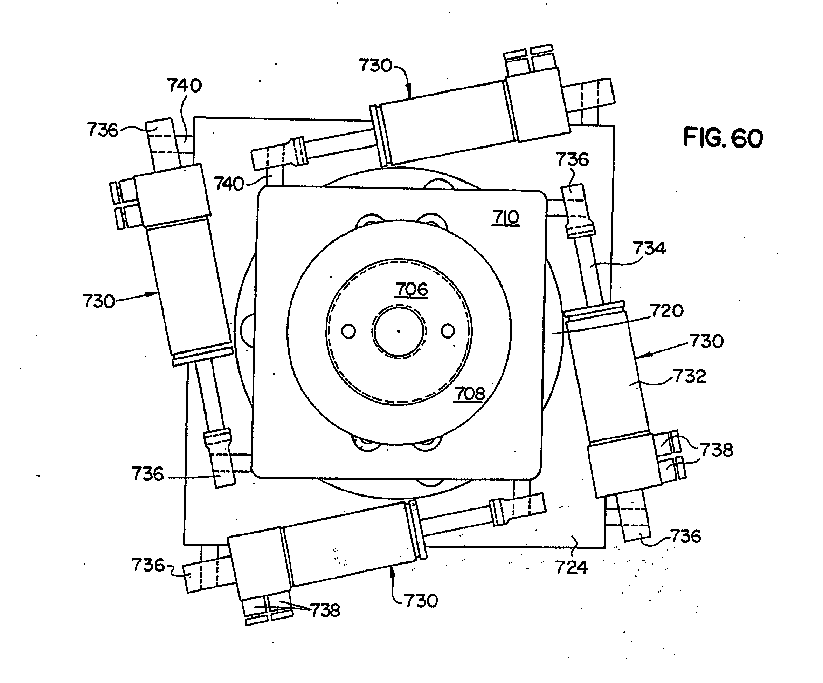

Referring to Figs. 60 and 61, four dampeners or shock absorbers 730 are attached to the top plate 710 and the lower plate 724. While fewer dampeners may be used, the design shown in the drawings uses four. The dampeners are oriented at an angle AA from vertical of about 30-60°, 35-55°, or 40-50°, with the angle AA often near 45°. The precise angle AA is not critical. The ranges of angles described here are selected because they generally provide for adequate range of travel. Each dampener 730 has a piston rod 734 that moves in and out from a cylinder 732. Adjusting valves 738 allows for adjustment of the dampening characteristics of the dampener 730. The dampener 730 is preferably a fluid-containing viscous dampener or shock absorber, although other types of dampeners may also be used.

Mounting fittings attach opposite ends of each dampener 730 to the top or upper plate 710 and to the lower plate 724. In the design shown, ball joints 736 are used, and are attached to mounting studs or posts projecting out adjacent to each corner of the upper and lower plates 710 and 724. As shown in Fig. 60, the cylinders 732 are pivotably attached to the lower plate 724, and the outer or upper ends of the piston rods 734 are pivotably attached to the upper plate 710. The design shown is symmetrical side-to-side and front-to-back. Springs or other elastic elements 742 (external or combined into or with the dampeners) may also optionally be used to exert return forces, in specific applications

As shown in Fig. 48, a camera head 534 is attached to (and suspended down from) the lower plate 724. Alternatively, a simple drop down accessory or plate may be used instead, of the camera head 534. Since the lower plate 724 is attached to the upper plate 710 through the u-joint 712, the camera head 534 can pivot or swing within the cone-shaped space 750 shown in Fig. 58. The assembly 704 may be provided alone as an accessory for use on various camera cranes and camera dollies. Alternatively, the assembly 704 may also be provided as part of the shock/vibration isolator 540.

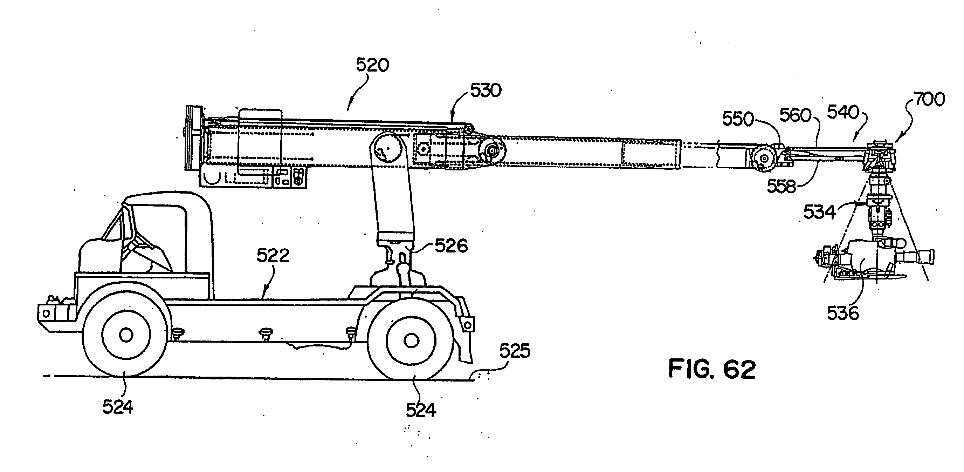

In a typical use, as shown in Figs. 58 and 62, the assembly 704 is attached to a head plate 702 of an isolator 540 supported on a crane 520, (although the assembly may equivalently be attached to other supporting structures, as well). A camera head, such as head 534 is then attached to the lower plate 724. Alternatively, if no head is used, the camera 536 may optionally be attached to the lower plate, directly or via an intermediate mounting accessory.

The dampening characteristics of the dampeners 730 are optionally adjusted using the valves or adjusters 738. These adjustments, if performed, may be made based on one or more of the weight of the camera, expected camera movements, and expected shock or vibration. The camera payload (including camera accessories also supported by the assembly 704, such as batteries, cables, remote control units, etc.) is balanced, so that the lower plate 724 is level.

The crane 520 maneuvers the camera 536 during filming. The entire crane may accelerate, turn, stop, or roll over uneven ground, etc. The crane arm 530 may be accelerated up or down in elevation, or side to side (panning), or may telescope in or out. Consequently, the head plate 702, which is rigidly attached to the crane, may move too erratically for filming. However, the camera 536 is largely mechanically isolated from sudden vertical movements of the crane via the vertical axis isolator 540, as described above. The camera is also largely isolated from sudden horizontal movements by the assembly 704.

For example, in response to a sudden impulse or jolt in the forward direction, the camera 536 and the lower plate 724 pivot rearwardly (about axle or axis 713). The dampeners limit the speed and extent of the rearward movement. The camera 536 and the lower plate 724 then return to the home or initial position, via gravity. The return movement is similarly dampened by the dampeners. The return movement is advantageously selected to take about one second, regardless of the displacement, (like a pendulum).

When a shock or acceleration impulse is encountered, and the lower plate 724 pivots, the camera will not remain level. However, if, as shown in Fig. 62, the camera is mounted on a gyro-stabilized camera head, the camera head will automatically compensate to keep the camera in a level position.

As described above, the isolator 540, together with the horizontal isolator assembly 610 or 704, can provide multiple degrees or modes of isolation. The horizontal isolator assembly 610 or 704 provides lateral isolation and longitudinal isolation. Additional or large movement vertical isolation is provided via the pivoting movement of the isolator arm 558. Elevation angulation compensation or correction is provided by the adjustable parallelogram linkage 602, as described above.

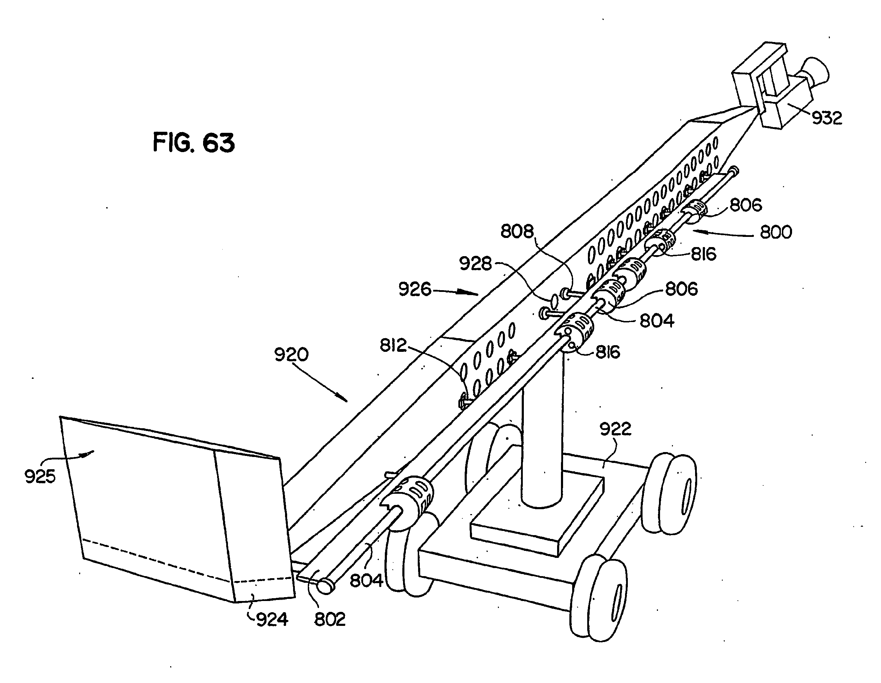

As shown in Fig. 63, a camera crane 920, which may be the same as or different than the crane 30 described above, has a boom arm 926 supported on a mobile base 922. The arm 926 is typically assembled from arm segments resulting in an arm of the desired length, for a particular filming sequence. However, the balancing system 800 described here can be used on virtually any type of camera crane arm.

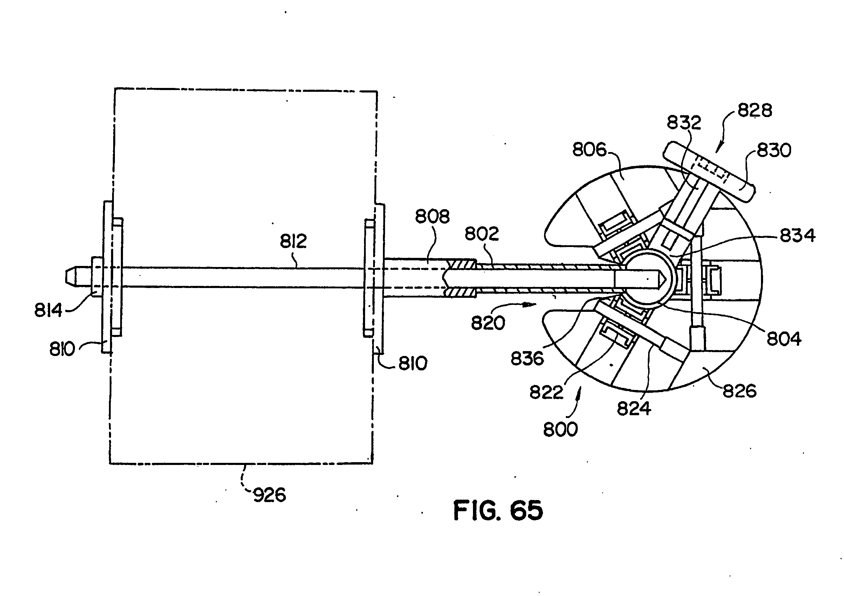

Referring to Figs. 63 and 65, the balancing system 800 includes one or more balance weights 806 that are slidable or rollable along a bar, tube or plate, in a front/back direction. In the specific design shown in Fig. 65, a weight bar 804 extends alongside the boom arm 926. Typically the weight bar 804 will extend for about 50, 60, 70, 80, or 90 % of the length of the boom arm 926. Typically, the section of the weight bar 804 behind the elevation axle 928 is shorter than the section or length of the weight bar 804 forward of the elevation axle, because the elevation axle is typically closer to the back end of the boom arm. The length of the boom arm in front of the elevation axle 928 is typically double the length of the boom arm extending behind the elevation axle.

As shown in Fig. 65, a plurality of mounting bars 812 extend laterally through the boom arm 926, washer plates 810, a spacer 808, through clearance holes in a mounting plate 802, and are threaded into the weight bar 804. A nut 814 clamps these components together and rigidly secures them onto the boom arm. The mounting bars are generally spaced from 0.3-2 meters (1 to 6 feet) apart, depending on the size of the boom arm and weight of the balance weights 806. Ordinarily, the mounting bars (as therefore the plate 802 and weight bar 804 are at the vertical centerline of the boom arm 926. The weight bar 804, which typically is made of metal, such as steel or aluminum, is dimensioned consistently with the size of the boom arm and loads to be carried. Outside diameters of the weight bar 804 will most often range from about 2-5 cm (¾ to about 2 inches).

Referring still to Fig. 65, the balance weight 806 has rollers 822 on axles 824. This allows the weight 806 to roll easily along the weight bar 804. In the design shown, each weight 806 has a front set and a back set of three equally radially spaced apart rollers. Other designs having more or less rollers in various configurations may of course be used. The rollers may also be replaced with other low friction devices, such as Teflon (fluorine resins) sliding surfaces. The rollers may be contoured or radiused, to match the curvature of the outside diameter of the bar or tube 804. Alternatively, the rollers may be flat and roll either on the curved outside diameter of the bar 804, or they may be flat and roll on flat sections of the bar 804. They may also be made of a non-metal material, such as polyurethane or rubber, for smooth and quiet rolling movement along the weight bar 804.

The balance weight 806 may be formed from one or more components or sections. The balance weights 806 generally are metal, such as aluminum or steel, to provide adequate weight within a compact volume. The balance weight 806 in Fig. 3 is formed largely as a single piece aluminum cylinder body 826. The openings and holes for the rollers and axles can be machined, cast, or otherwise formed as needed.

The body 826 of the balance weight 806 has a slot 820 to provide clearance around the mounting plate 802. Since the plate 802 extends into the slot 820, the balance weights 806 can rotate only slightly on the bar 804. This keeps the weights angularly aligned on the bar, with the brake knob 830 in a convenient position. Alternatively, the bar can have a non-round shape, or the rollers 822 can roll on flattened surfaces of the bar, to prevent the balance weights 806 from turning or rotating.

In some designs, rotation of the balance weights 806 may be acceptable. In these designs, the balance weights 806 may have virtually any shape and configuration, with or without rollers. In designs having only two mounting bars (a front and a rear mounting bar), the balance weights 806 need not even require clearance to move past the mounting bars. Hence, in these designs, the balance weights can even be continuous geometric shapes or masses, with no slots for clearing any plate or mounting bar.

A resilient pad 816 may be slidably supported on the bar 804 between each of the balance weights 806, to reduce noise and impact, if a weight slides or rolls into an adjacent weight 806. The balance weights may also or alternatively have resilient end bumpers 816 for the same purpose.

The number of balance weights 806 used may vary with the length of the boom arm 926 and with the payload (i.e., the weight of the camera 932 and any other loads carried by the crane), as well as with the weight of the balance weights 806 themselves. Two or more of the balance weights 806 can optionally be joined together by a linking bar or strap, so that they move together and act as a single heavy balance weight. The linking bar may be designed to keep the balance weights 806 close together, or contacting each other, or it may be designed to keep the balance weights spaced apart from each other. The linking bar can speed up use of the balancing system because it allows two or more balance weights 806 to be moved in a single action, and with using the brake 828 on only one of the weights. In the design shown in the Figures, the balance weights 806 are designed to weigh about 10-40 kg (25-85, 35-75, 45-65 or 55 lbs). Balance weights in this range are more easily handled while also weighing enough to provide sufficient balancing forces.

As shown in Fig. 65, each of the balance weights 806 advantageously has a brake 828 to adjust the ease of movement of the weight 806 along the weight bar 804, and to generally also lock the weight 806 in place. Various techniques and designs may be used as the balance weight brake. In Fig. 3, the brake 838 includes a hand knob or lever 830 connected to a bolt or stud 832 threaded into the body 826 of the balance weight 806. A brake pad 834 at the inner end of the stud 832 is positioned to contact the weight bar 804 with increasing force, as the hand knob 830 is turned in (clockwise). A brake stop 836 is fixed in position within the body 826 of the balance weight 806 at a position opposite to the brake pad 834.

A slight clearance gap separates the brake stop 836 from the weight bar 804, when little or no braking force is applied by the brake 828. When the brake 828 applies moderate or larger amounts of braking force (by tightening or turning the knob 830 further in, the brake stop 836 contacts the weight bar 804. The bar is then clamped between the brake pad 834 and the brake stop 836. This prevents the brake 828 from applying excessive force on the roller 822 positioned opposite to the brake 828. The brake pad 834 and the brake stop 836 are advantageously made of a low friction material, such as Teflon.

The balancing system 800 may be provided as permanent system on the crane 920. In can also be retrofit onto existing cranes. Alternatively, it can be provided as an accessory, which is used as needed, and then removed from the crane. In use, to install the balancing system 800 shown in Fig. 65, the crane arm 926 is first assembled and set up, typically by bolting arm segments together. The weight bar 804 and mounting plates 802 are then attached to the arm 926 via the mounting bars 812, spacers 808, washers 810 and nuts 814 as described above. Balance weights 806 are then installed onto the weight bar 804 by sliding them on from one end of the bar 804. After the balance weights 806 are installed on the bar 804, a bar stop 840 is secured at the end of the bar 804. This prevents the balance weights 806 from inadvertently coming off of the bar 804.

The plate 802 and bar 804 may each be a single piece, generally about 6 meters (16-24,18-22, or about 19 feet) long. This is short enough to allow them to be transported in most trucks, and long enough to provide sufficient weight movement along the bar, in most applications. The plate 802 and bar 804 may also be provided in two or more segments or sections, which adjoin or are butted together during installation. The plate 802 is not essential and can be omitted, with the bar 804 supported by the mounting bars 812.

With the balancing system 800 installed, the crane is ready for use. The crane and balancing system can be used in many different ways. Typically, the crane arm 926 is fully loaded for use, including all payloads, and is then initially balanced by placing counterweights 924 in the counterweight bucket, platform or holder 925 at the back end of the arm. During this balancing procedure, all of the moveable balance weights 806 are moved to the back of the arm 926. With the arm balanced, the crane can be readily used to support and move the camera 932 as needed for the desired filming sequence.

Some sequences require that the camera be submerged into water, e.g., a lake, river or ocean (or into a pool or tank intended to simulate a lake, etc.). Due to buoyancy forces, as the camera and front end of the crane arm 926 are submerged, the crane arm 926 becomes out of balance. The upward acting buoyancy forces require compensating downward acting force on the front end of the arm 926, to keep the camera submerged in place. The balance weights 806 are moved forward for this purpose. Specifically, the brake 828 of each of the weights is released by turning the knob or lever 830. The weights 806 are then free to roll or slide along the weight bar 804. The weights 806 are moved forward, by hand, and are then relocked into place using the brake 828. After a sufficient number of weights have been moved forward by a sufficient distance along the bar 804, the arm 926 becomes rebalanced. The camera 932 will then remain substantially in place under water, despite the buoyancy forces. When the arm and camera are removed from underwater, the balance weights 806 are returned to their original rear position.

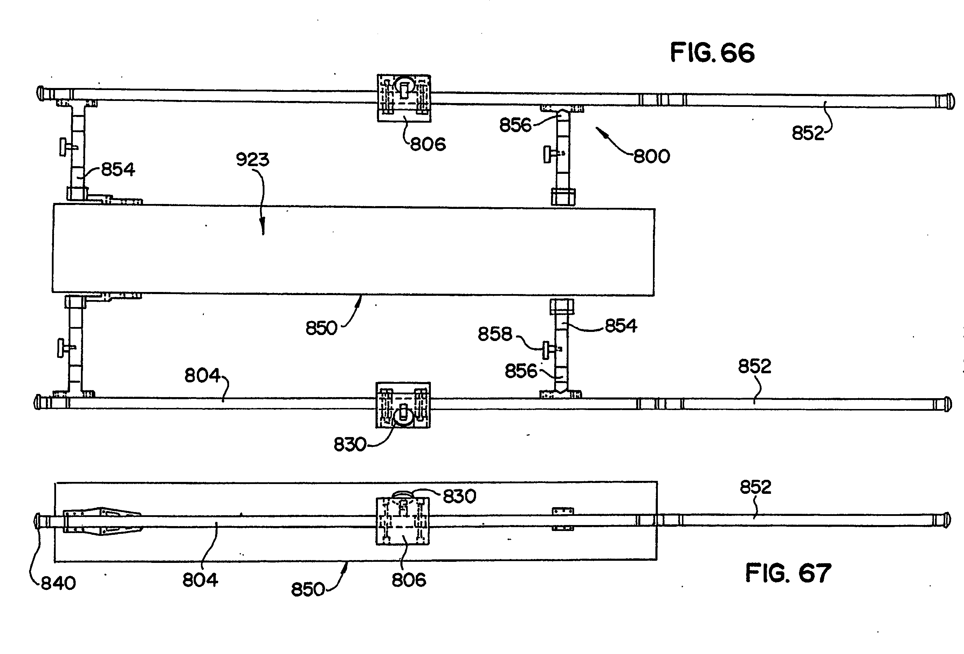

In the design shown in Fig. 63, on a 14 m crane arm 926, using six balance weights 806 each weighing 25 kg, a shift in the center of gravity of the combined weights of about 4.5 m exerts a balancing force of about 50 kg. This amount of force is generally more than enough to offset buoyancy forces during underwater filming. As shown in Fig. 65, the balancing system is typically installed only on one side of the crane arm 926. This allows the system to be used without moving back and forth under the arm to move the balance weights 806, or the need for two crane arm operators. The balancing system 800 may however be installed on both sides of the crane arm, with each side optionally a mirror image of the other, as shown in the design in Fig. 66. In some crane arms, the balancing system 800 might also be installed on the top or bottom of the arm, or both.

As the angle of elevation of the arm changes, the shape of the arm also changes. While the arm 26 is rigid, it still deflects or sags a small amount, especially when loaded. Since the arm is typically balanced while horizontal, the arm will tend to become unbalanced as the elevation angle of the arm changes, e.g., when the arm is tilted up to near vertical to achieve a high camera position. In this type of use, the arm can be quickly and easily rebalanced via the balancing system 800, by moving one or more of the balance weights. Although rebalancing can also be achieved by moving counterweights into or out of the weight bucket, this tends to be more time consuming and may also require a ladder, depending on the height of the weight bucket when rebalancing is performed. It also involves handling loose counterweights, which must be separately stored and handled, and which can be accidentally dropped. In contrast, after the balancing system 800 is installed, balancing, or rebalancing can be achieved without use of loose or free weights.

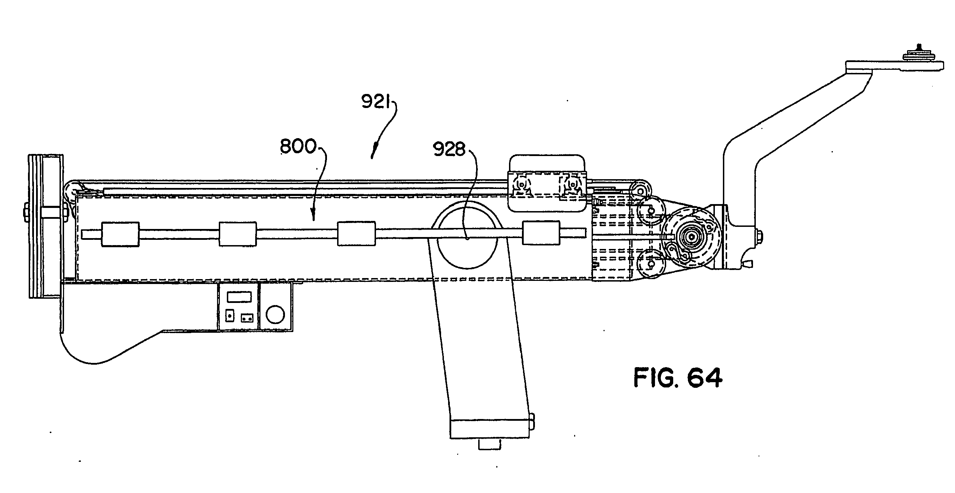

Figs. 64, 66, and 67 show the balancing system 800 as used on a telescoping crane, as described above, for example. As shown in Fig. 64, the balancing system is installed on the fixed (non-telescoping) section or tube 923 of the crane arm 921, generally on the vertical centerline. With telescoping cranes, the arm sections or tubes are relatively short and the crane achieves extended reach via the telescoping movement of multiple arm sections. As shown in Fig. 66, since the fixed section is relatively short, an extension bar 854 may be attached to and extend forward from the weight bar 804. The extension bar allows for a greater range of travel for the balance weights 806. To prevent the balance weights from rotating on the bar 804, a key on the balance weight 806 may be provided and extend into a slot in the bar 804.

In the design shown in Fig. 66, no mounting plate 802 is used. The bar 804 (with the term bar here including tubes and plates) is supported on standoffs 854 or other mounting bars or fittings attached to the fixed section 923 of the crane arm 921. The standoffs 854 may be temporarily attached and removed when the balancing system is not in use, or they may be permanent parts of the crane arm 921. Front and rear sockets 856 on the bar 804 fit into or over the standoffs 854 and are locked in place with a lock knob 858. This allows the bar 804 to be quickly and easily installed and removed. The balance weights 806 are installed, and the balancing system 800 is used as described above. As shown in Fig. 66, a balancing system 800 may be installed on both sides of the crane arm 921.

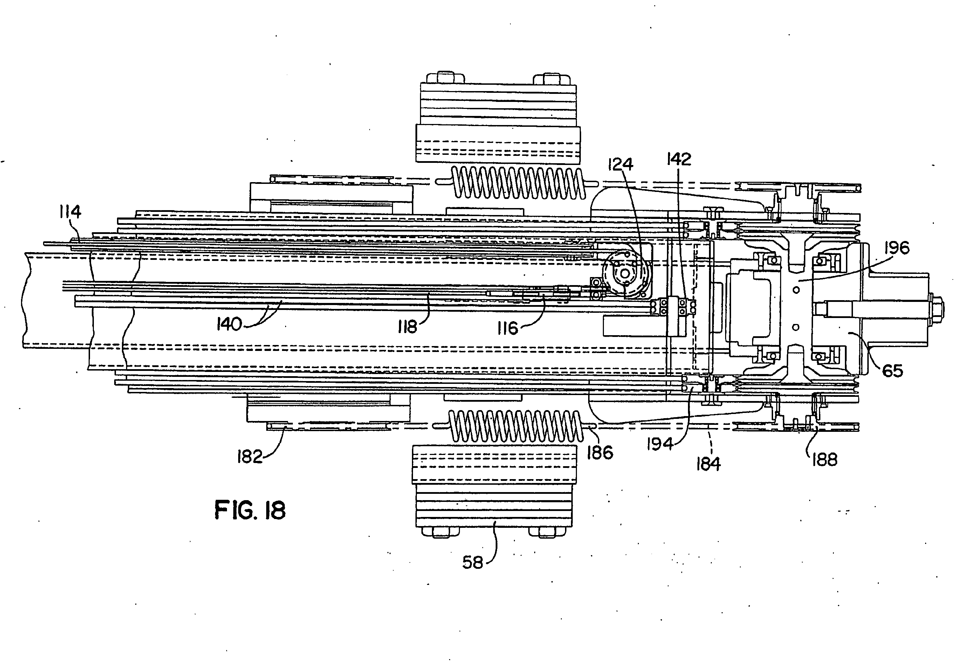

The isolator 540 and isolator assembly 610 or 704, and the balancing system 800, as well as the other features shown in Figs. 45-67, may be used on, and in conjunction with one or more features of, the camera crane 30 illustrated in Figs. 1-44. For example, a telescoping crane arm may be used in conjunction with a vibration isolator and/or a balancing system to provide an improved camera crane. Any one of the features described above may be used alone or in combination with one or more of the additional features described above.

Thus, a camera crane, hydraulic system, actuator, valve, shock and/or vibration isolator, and balancing system for a camera have been shown and described. Various changes and modifications may of course be made without departing from the scope of the invention. The invention, therefore, should not be limited, except by the following claims and their equivalents.

## Claims

1. A camera support having:
a first member (710), a second member (724) located below the first member (710) along a gravity line and a pivot joint (712) connecting the second member (724) to the first member (710), with the second member (724) pivotable about a first axis and about a second axis;
at least one first dampener (730) attached to the first member (710) and to the second member (724), for dampening pivoting movement of the second member (724) about the first axis;
at least one second dampener (730) attached to the first member (710) and to the second member (724), for dampening pivoting movement of the second member (724) about the second axis; and
a camera head (62, 534) attached to the second member (724), with the second member (724) and the camera head (64, 534) forming a gravity centered pendulum connected to the first member (710) via the pivot joint (712) and the dampening members.

2. The camera support of claim 1, wherein the first axis is perpendicular to the second axis.

3. The camera support of claim 1, wherein the first axis is co-planer with the second axis.

4. The camera support of claim 1, further comprising third and fourth dampeners (730) attached to the first and second members (710, 724), the first, second, third and fourth dampeners (730) extending diagonally between the first and second members (710, 724).

5. The camera support of claim 1, comprising an overhead isolator (704) supported by a vertical axis isolator (540), the vertical axis isolator (540) including:
a base (548);
an arm (558) pivotably attached to the base (548);
at least one spring (566) connected to the base (548) and to the arm (558);
at least one vertical axis dampener (590) connected to the base (548) and to the arm (558); and
a leveling linkage (602) connecting to the base (548) and to the horizontal axis isolator (540).

6. The camera support of claim 5, further including adjustment features (562a, 562b, 562c) for adjusting the leveling linkage (602) to compensate for angulation movement of the base (548).

7. The camera support of claim 4, wherein the first member (710) comprises a first plate (702), the first, second, third and fourth dampeners (730) oriented at an angle of about 30-60° to the first plate (702).

8. The camera support of claim 7, wherein the dampeners (730) comprise hydraulic shock absorbers.

9. The camera support of claim 1, further comprising adjusting means (738) for adjusting the dampening characteristics of the dampeners (730).

## Patentansprüche

1. Eine Kamera-Stütze, aufweisend:
ein erstes Element (710), ein zweites Element (724), welches entlang einer Schwerkraftlinie unterhalb des ersten Elements (710) angeordnet ist, und ein Drehgelenk (712), welches das zweite Element (724 mit dem ersten Element (710) verbindet, wobei das zweite Element (727) um eine erste Achse und um eine zweite Achse drehbar ist;
zumindest einen ersten Dämpfer (730), welcher an dem ersten Element (710) und dem zweiten Element (724) befestigt ist, zum Dämpfen der Drehbewegung von dem zweiten Element (724) um die erste Achse;
zumindest einen zweiten Dämpfer (730), welcher an dem ersten Element (710) und dem zweiten Element (724) befestigt ist, zum Dämpfen der Drehbewegung von dem zweiten Element (724) um die zweite Achse; und
einen Kamera-Kopf (62, 534), welcher an dem zweiten Element (724) befestigt ist, wobei das zweite Element (724) und der Kamera-Kopf (64, 534) ein schwerkraftzentriertes Pendel formen, welches mittels des Drehgelenks (712) und der Dämpf-Elemente mit dem ersten Element (710) verbunden ist.

2. Die Kamera-Stütze nach Anspruch 1, wobei die erste Achse senkrecht zu der zweiten Achse ist.

3. Die Kamera-Stütze nach Anspruch 1, wobei die erste Achse koplanar mit der zweiten Achse ist.

4. Die Kamera-Stütze nach Anspruch 1, ferner aufweisend einen dritten und einen vierten Dämpfer (730), welche an dem ersten und dem zweiten Element (710, 724) befestigt sind, wobei sich der erste, der zweite, der dritte und der vierte Dämpfer (730) diagonal zwischen dem ersten und dem zweiten Element (710, 724) erstrecken.

5. Die Kamera-Stütze nach Anspruch 1, aufweisend einen Überkopf-Isolator (704), welcher durch einen vertikale-Achse-Isolator (540) abgestützt ist, wobei der vertikale-Achse-Isolator (540) aufweist:
eine Basis (548);
einem Arm (558), welcher drehbar an der Basis (548) befestigt ist;
zumindest eine Feder (566), welche mit der Basis (548) und dem Arm (558) verbunden ist;
zumindest einen vertikale-Achse-Dämpfer (590), welcher mit der Basis (548) und dem Arm (558) verbunden ist; und
eine Ausgleichsverbindung (602), welche mit der Basis (548) und dem horizontale-Achse-Isolator (540) verbunden ist.

6. Die Kamera-Stütze nach Anspruch 5, ferner aufweisend Einstellmerkmale (562a, 562b, 562c) zum Einstellen der Ausgleichsverbindung (602), um eine Angulationsbewegung der Basis (548) zu kompensieren.

7. Die Kamera-Stütze nach Anspruch 4, wobei das erste Element (710) eine erste Platte (702) aufweist, wobei der erste, der zweite, der dritte und der vierte Dämpfer (730) bezüglich der ersten Platte (702) in einem Winkel von ungefähr 30-60° ausgerichtet sind.

8. Die Kamera-Stütze nach Anspruch 7, wobei die Dämpfer (730) hydraulische Stoßdämpfer aufweisen.

9. Die Kamerastütze nach Anspruch 1, ferner aufweisend Einstellmittel (738) zum Einstellen der Dämpfeigenschaften von den Dämpfern (730).

## Revendications

1. Support de caméra présentant :
un premier élément (710), un second élément (724) situé en dessous du premier élément (710) le long d'une ligne de gravité et une articulation pivot (712) qui connecte le second élément (724) au premier élément (710), le second élément (724) pouvant pivoter autour d'un premier axe et autour d'un second axe ;
au moins un premier dispositif d'amortissement (730) fixé au premier élément (710) et au second élément (724), destiné à amortir un déplacement en pivotement du second élément (724) autour du premier axe ;
au moins un deuxième dispositif d'amortissement (730) fixé au premier élément (710) et au second élément (724), destiné à amortir un déplacement en pivotement du second élément (724) autour du second axe ; et
une tête de caméra (62, 534) fixée au second élément (724), le second élément (724) et la tête de caméra (64, 534) formant un pendule centré par la gravité connecté au premier élément (710) par l'intermédiaire de l'articulation pivot (712) et des éléments d'amortissement.

2. Support de caméra selon la revendication 1, dans lequel le premier axe est perpendiculaire au second axe.

3. Support de caméra selon la revendication 1, dans lequel le premier axe est coplanaire avec le second axe.

4. Support de caméra selon la revendication 1, comprenant en outre des troisième et quatrième dispositifs d'amortissement (730) fixés aux premier et second éléments (710, 724), les premier, deuxième, troisième et quatrième dispositifs d'amortissement (730) s'étendant en diagonale entre les premier et second éléments (710, 724).

5. Support de caméra selon la revendication 1, comprenant un dispositif d'isolation surélevé (704) supporté par un dispositif d'isolation d'axe vertical (540), le dispositif d'isolation d'axe vertical (540) comprenant :
une base (548) ;
un bras (558) fixé en pivotement à la base (548) ;
au moins un ressort (566) connecté à la base (548) et au bras (558) ;
au moins un dispositif d'amortissement d'axe vertical (590) connecté à la base (548) et au bras (558) ; et
une tringlerie de mise à niveau (602) connectée à la base (548) et au dispositif d'isolation d'axe horizontal (540).

6. Support de caméra selon la revendication 5, comprenant en outre des caractéristiques de réglage (562a, 562b, 562c) destinées à régler la tringlerie de mise à niveau (602) pour compenser un déplacement angulaire de la base (548).

7. Support de caméra selon la revendication 4, dans lequel le premier élément (710) comprend une première plaque (702), les premier, deuxième, troisième et quatrième dispositifs d'amortissement (730) étant orientés selon un angle compris entre 30° et 60° environ par rapport à la première plaque (702).

8. Support de caméra selon la revendication 7, dans lequel les dispositifs d'amortissement (730) comprennent des amortisseurs de chocs hydrauliques.

9. Support de caméra selon la revendication 1, comprenant en outre des moyens de réglage (738) destinés à régler les caractéristiques d'amortissement des dispositifs d'amortissement (730).
